# EUROPEAN PATENT APPLICATION

(11) **EP 4 709 013 A1**
(43) Date of publication of application: **11.03.2026**
(21) Application number: 24797480.1
(22) Date of filing: 26.04.2024
(51) Int. Cl.: H04W 72/25, H04L 5/00, H04W 72/543, H04W 8/24, H04W 4/40, H04W 92/18, H04W 72/02, H04W 72/542

(54) **METHOD AND DEVICE FOR PERFORMING COMMUNICATION IN WIRELESS COMMUNICATION SYSTEM**

(30) Priority: 27.04.2023 US 202363462523 P; 28.04.2023 KR 20230056413; 01.05.2023 US 202363463291 P; 02.05.2023 KR 20230057208
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2024/005698
(87) International publication number: WO 2024/225826

(57) **Abstract**

Provided are a method for performing wireless communication by a first device, and a device for supporting same. The method may comprise the steps of: acquiring information about a plurality of carriers; acquiring a packet on the basis of a qualify of service (QoS) flow; and transmitting on the basis of one or more carriers related to the QoS flow among the plurality of carriers. For example, information about at least one carrier per QoS flow can be provided from a vehicle-to-everything (V2X) layer of a first device.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment, a method for performing wireless communication by a first device may be provided. The method may include: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

Based on an embodiment, a first device adapted to perform wireless communication may be provided. The first device may include: at least one transceiver; at least one processor; and at least one memory connected to the at least one processor and storing instructions, and the instructions, based on being executed by the at least one processor, may cause the first device to perform operations comprising: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

Based on an embodiment, a processing device adapted to control a first device may be provided. For example, the processing device may include: at least one processor; and at least one memory connected to the at least one processor and storing instructions, and the instructions, based on being executed by the at least one processor, may cause the first device to perform operations comprising: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

Based on an embodiment, a non-transitory computer-readable storage medium storing instructions may be provided. The instructions, based on being executed, may cause a first device to perform operations comprising: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

Based on an embodiment, a method for performing wireless communication by a second device may be provided. The method may include: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

Based on an embodiment, a second device adapted to perform wireless communication may be provided. The second device may include: at least one transceiver; at least one processor; and at least one memory connected to the at least one processor and storing instructions, and the instructions, based on being executed by the at least one processor, may cause the second device to perform operations comprising: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

Based on an embodiment, a processing device adapted to control a second device may be provided. For example, the processing device may include: at least one processor; and at least one memory connected to the at least one processor and storing instructions, and the instructions, based on being executed by the at least one processor, may cause the second device to perform operations comprising: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

Based on an embodiment, a non-transitory computer-readable storage medium storing instructions may be provided. The instructions, based on being executed, may cause a second device to perform operations comprising: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

### ADVANTAGEOUS EFFECTS

The present disclosure may provide a method and device capable of effectively providing services in a wireless communication system. For example, through embodiments proposed by the present disclosure, communication may be efficiently performed.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of a wireless communication environment, based on an embodiment of the present disclosure.
FIG. 10 shows a procedure for beam failure detection, based on an embodiment of the present disclosure.
FIG. 11 shows a procedure related to RLF detection, based on an embodiment of the present disclosure.
FIG. 12 shows a procedure related to RLF detection, based on an embodiment of the present disclosure.
FIG. 13 shows an example of a relationship between a QoS flow and a carrier, based on an embodiment of the present disclosure.
FIG. 14 shows an example of a procedure for providing a QoS flow, based on an embodiment of the present disclosure.
FIG. 15 shows a method for a first device to perform wireless communication, based on an embodiment of the present disclosure.
FIG. 16 shows a method for a second device to perform wireless communication, based on an embodiment of the present disclosure.
FIG. 17 shows a communication system 1, based on an embodiment of the present disclosure.
FIG. 18 shows wireless devices, based on an embodiment of the present disclosure.
FIG. 19 shows a signal process circuit for a transmission signal, based on an embodiment of the present disclosure.
FIG. 20 shows another example of a wireless device, based on an embodiment of the present disclosure.
FIG. 21 shows a hand-held device, based on an embodiment of the present disclosure.
FIG. 22 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

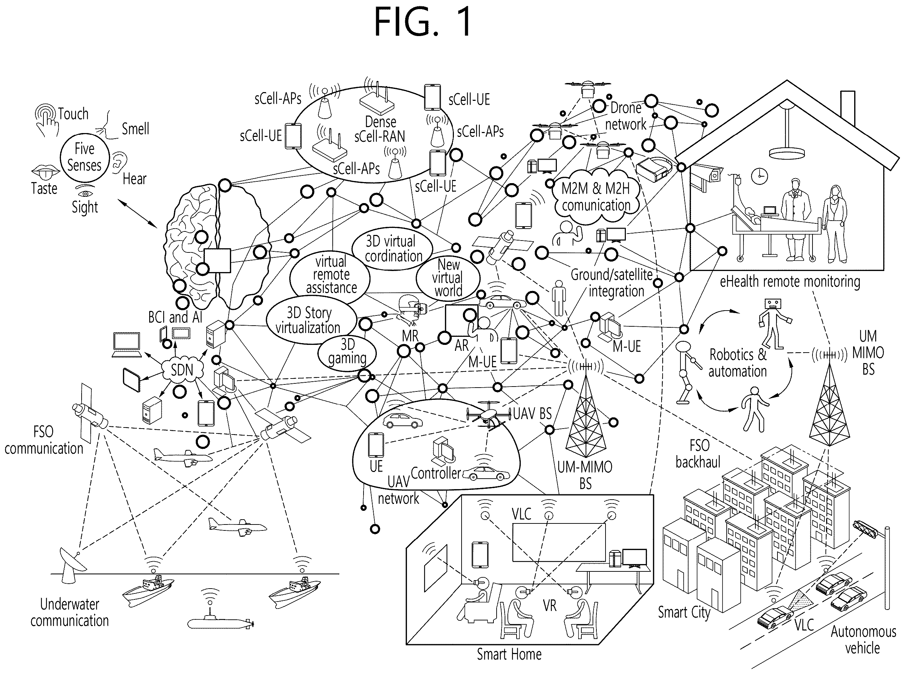

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

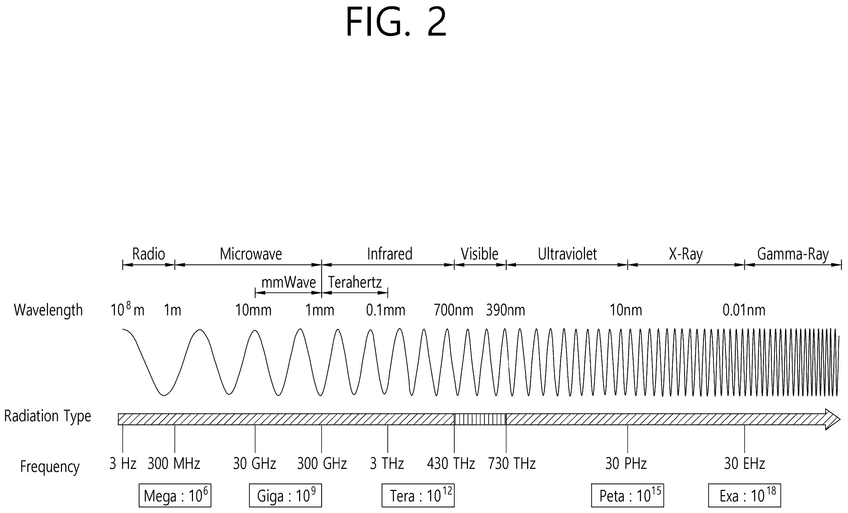

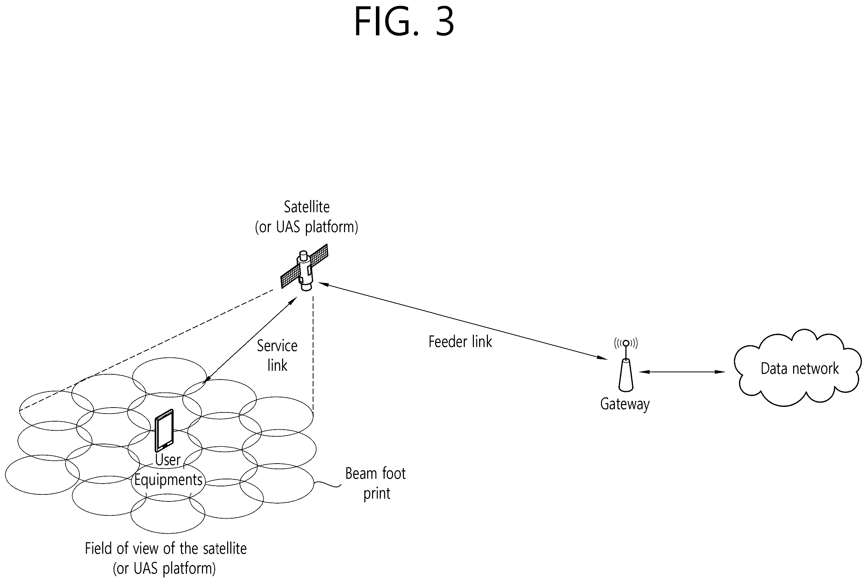

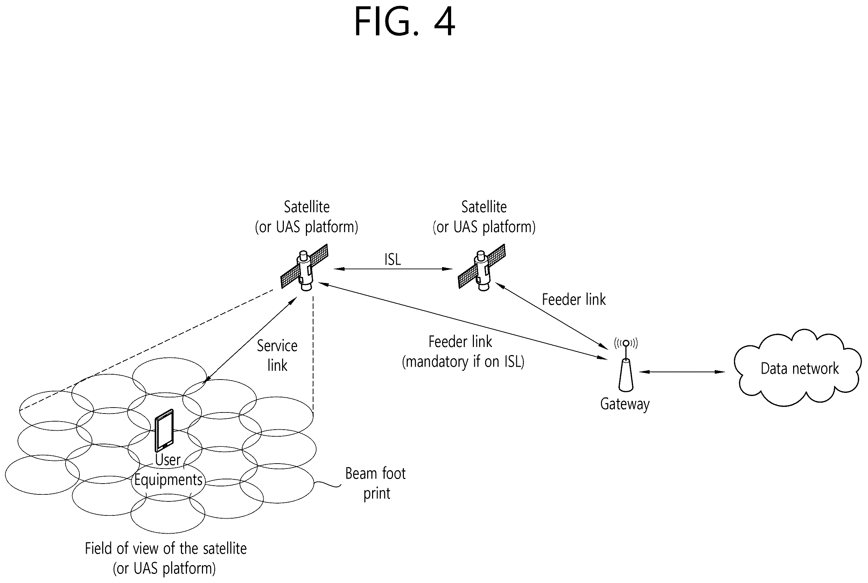

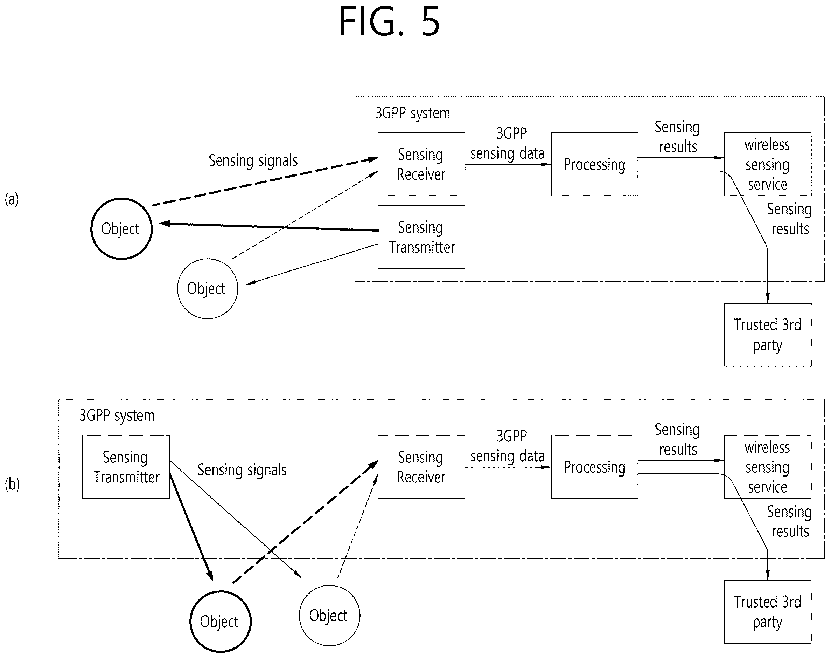

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| | 15kHz (u=0) | 14 | 10 | 1 |
| normal CP | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

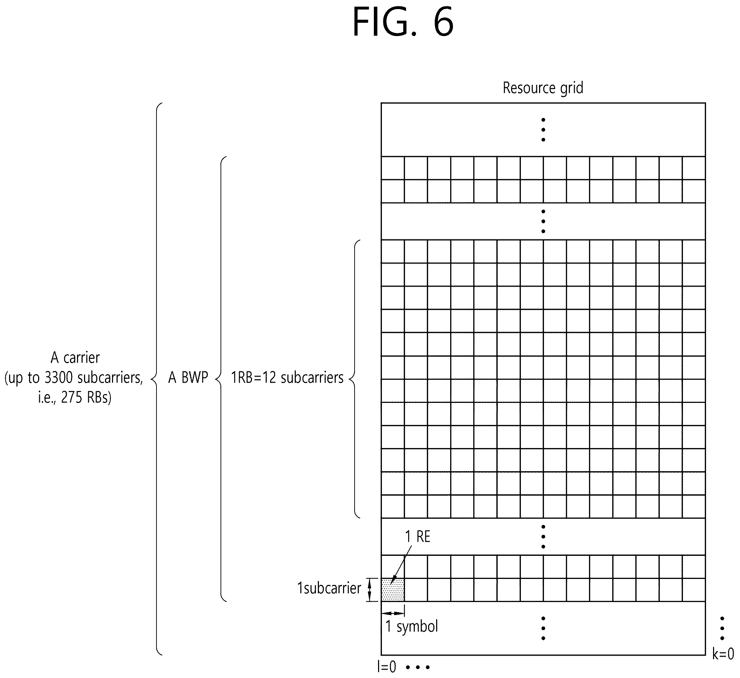

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

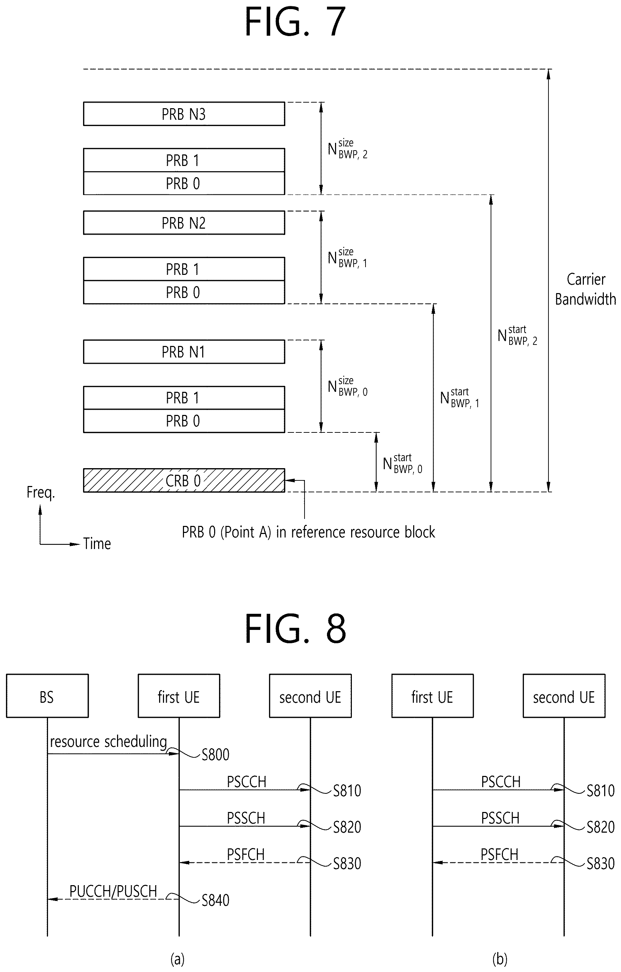

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

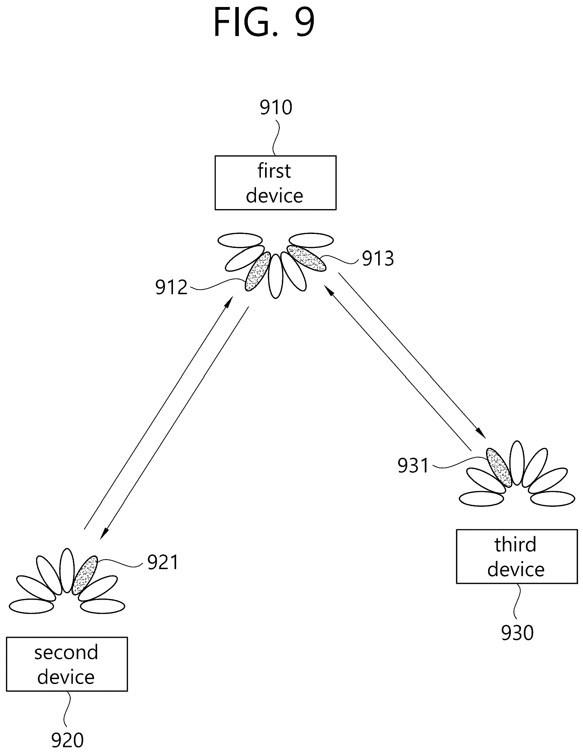

FIG. 9 shows an example of a wireless communication environment, based on an embodiment of the present disclosure. The embodiment of FIG. 9 may be combined with various embodiments of the present disclosure.

Referring to FIG. 9, a first device (910), a second device (920), and a third device (930) are shown as part of devices using wireless channels in a wireless communication system. FIG. 9 shows only one first device (910), one second device (920), and one third device (930), but it is not limited thereto.

According to the present disclosure, the first device (910), second device (920), and/or third device (930) may transmit and receive wireless signals in a millimeter-wave (mmWave) band. For example, to improve channel gain, the first device (910), second device (920), and/or third device (930) may perform beamforming. Here, beamforming may include transmission beamforming and reception beamforming. For example, the first device (910), second device (920), and/or third device (930) may provide directivity to transmission or reception signals. For example, the first device (910), second device (920), and/or third device (930) may select serving beams (912, 913, 921, 931) through beam search or beam management procedures. After the serving beams (912, 913, 921, 931) are selected, communication may be performed through resources quasi co-located (QCL) with resources transmitting the serving beams.

According to the present disclosure, the first device (910), second device (920), and/or third device (930) may include an antenna array. Each antenna included in the antenna array may be referred to as an array element or antenna element. The antenna array may be configured in various forms such as a linear array or a multi-layer array. The antenna array may be referred to as a massive antenna array. For example, the antenna array may include multiple sub-arrays, each including a plurality of antenna elements.

For example, beam management operations in mmWave frequencies have recently been introduced in the conventional NR Uu (operation between base station and UE). For example, beam management operations may include beam scheduling, beam selection, beam failure recovery, etc. In the present disclosure, beam management operations (e.g., beam failure recovery) are proposed as follows. For example, the following proposal may relate to beam management operations in NR. Meanwhile, the following proposal is not limited to NR. For example, the following proposal may relate to beam management operations in sidelink. Meanwhile, the following proposal is not limited to sidelink. For example, the following proposal may relate to beam management operations in NR sidelink.

A UE may perform FR2 (mmWave frequencies-based communication) operations based on the following operations. For example, FR2 may be sidelink FR2. For example, sidelink FR2 may refer to sidelink-based communication using sidelink mmWave frequencies. Meanwhile, the following operations are not limited to sidelink FR2. The present disclosure is not limited to sidelink FR2. For example, the present disclosure may be applicable to 5G FR2 or beyond 5G FR2 (e.g., 6G FR2).
- Beam sweeping operation: a UE may perform operations to find the optimal beam (e.g., transmit beam, receive beam) by sweeping beams used for communication. For example, communication during beam sweeping operations may be sidelink communication. For example, the UE may perform an operation of covering a spatial area using a transmit beam and/or receive beam for a specific time interval based on a pre-configured scheme.
- Beam measurement operation: a UE may perform operations to find a reference signal (RS) whose measurement value greater than or equal to a threshold while measuring RS transmitted by the peer UE.
- Beam selection operation: a UE may perform operations to select the optimal beam (e.g., transmit beam, receive beam) based on beam measurement results.
- Beam reporting operation: a UE may perform operations to report the selected optimal beam to the peer UE or base station.
- Beam pairing operation: A UE may perform an operation to synchronize (pair) beams (e.g., transmit beam/receive beam) between UEs to enable communication via inter-UE beams (e.g., transmit beam/receive beam).

In (sidelink) (FR2), for beam management (e.g., beam sweeping, beam measurement, beam selection, beam pairing) of a UE, the UE may transmit and receive a reference signal (RS) to select/determine and adjust/manage a beam usable between one another.

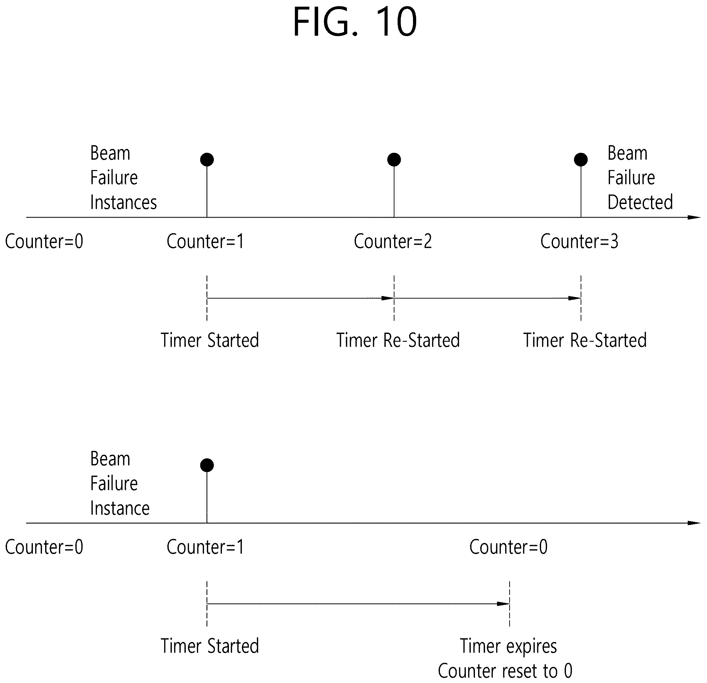

FIG. 10 shows a procedure for beam failure detection, based on an embodiment of the present disclosure. The embodiment of FIG. 10 may be combined with various embodiments of the present disclosure.

Referring to FIG. 10, when a UE has detected a failure of a beam used for communication greater than or equal to a threshold, the UE may trigger a beam failure recovery procedure to recover the beam. For example, when the UE has detected a failure of a beam used for sidelink communication greater than or equal to a threshold, the UE may trigger a sidelink beam failure recovery procedure to recover the beam. For example, when the MAC layer of the UE has received beam failure instances from the physical layer greater than or equal to a threshold, the UE may trigger a beam failure recovery procedure to recover the beam. For example, the MAC layer of the UE may perform a procedure of triggering the beam failure recovery procedure to recover the beam. For example, when the MAC layer of the UE has received beam failure instances from the physical layer greater than or equal to a threshold, the UE may trigger a sidelink beam failure recovery procedure to recover the beam. For example, the MAC layer of the UE may perform a procedure of triggering the sidelink beam failure recovery procedure to recover the beam. The present disclosure has been described with respect to sidelink beam failure but is not limited thereto. For example, the present disclosure may be applied not only to sidelink beam failures but also to beam failures other than sidelink beam failures.

In FIG. 10, for example, the MAC layer may be configured by RRC with a beam failure recovery procedure which is used for indicating when beam failure is detected. For example, beam failure may be detected by counting beam failure instance indication from the lower layers to the MAC entity. For example, the RRC may configure a beam failure instance maximum count and a beam failure detection timer. For example, the beam failure instance maximum count may determine after how many beam failure events the UE triggers beam failure recovery. For example, the beam failure instance maximum count may be configured to 3. For example, the beam failure detection timer may be timer for beam failure detection. For example, if beam failure instance indication has been received from lower layers, the MAC entity may start or restart the beam failure detection timer. For example, if beam failure instance indication has been received from lower layers, the MAC entity may increment a beam failure instance counter by 1. For example, if the beam failure instance counter is greater than or equal to the beam failure instance maximum count, the MAC entity may detect beam failure. For example, if a beam failure instance counter is greater than or equal to 3, beam failure may be detected. For example, if the beam failure instance counter is greater than or equal to the beam failure instance maximum count, the MAC entity may trigger a beam failure recovery. For example, if a beam failure instance counter is greater than or equal to 3, a beam failure recovery procedure may be triggered. For example, if the beam failure detection timer expires, the MAC entity may set the beam failure instance counter to zero.

In FIG. 10, it is shown that the beam failure instance maximum count is configured to 3, but it is not limited thereto. For example, the beam failure instance maximum count may be configured to a value different from 3.

In this disclosure, subsequent operations of a UE in case the (SL) BFR procedure fails are proposed as follows.

When beam failure recovery (BFR) is triggered, the UE may transmit an (SL) BFR MAC CE (e.g., for indicating a problem with the currently operating TX or RX beam, indicating an issue related to the reference signal related to the current TX or RX beam, or indicating the best TX or RX beam for beam failure recovery triggered by BFR) and also activate an (SL) BFR timer to start the (SL) BFR procedure. If the UE does not receive feedback (e.g., (SL) BFR confirmation MAC CE or HARQ ACK feedback) for the transmitted (SL) BFR MAC CE until the expiry of the BFR timer, the UE may initiate the following procedure.
- The UE may retransmit the (SL) BFR MAC CE (e.g., to indicate an issue with the currently operating TX or RX beam, indicate an issue related to the reference signal related to the current TX or RX beam, or indicate the best TX or RX beam for beam failure recovery triggered by BFR) and re-trigger the BFR procedure.
- The UE may consider the (SL) BFR procedure as failed, declare (or indicate or detect) an (SL) RLF on the PC5 RRC connection that triggered the (SL) BFR, and report (or indicate) to the base station or peer UE with cause: (sidelink) RLF based on (SL) beam failure recovery (BFR) failure.
- The UE may re-trigger or re-perform at least one operation among beam sweeping, beam selection, or beam pairing.

For example, when a UE detects a beam failure in a beam in use for (sidelink) communication by a threshold (or greater than or equal to the threshold), the UE may trigger a (sidelink) beam failure recovery procedure and perform a procedure for recovering a beam. In the present disclosure, when a (sidelink) beam failure occurs by a threshold (or greater than or equal to the threshold), a BFR operation of the UE may be defined as follows,

In the present disclosure, when an (SL) BFR procedure fails, a subsequent operation of the UE is proposed as follows.

When a beam failure recovery (BFR) is triggered, the UE may transmit an (SL) BFR MAC CE (e.g., for a purpose of indicating that there is a problem in a currently operating transmit beam or receive beam, or for a purpose of indicating that there is a problem in a reference signal related to a currently operating transmit beam or receive beam, or for a purpose of indicating a best transmit beam or a best receive beam for beam failure recovery because BFR is triggered) and may also run an (SL) BFR timer to start an (SL) BFR process. If feedback (e.g., an (SL) BFR confirmation MAC CE ((SL) BFR confirmation MAC CE) or HARQ ACK feedback) for the transmitted (SL) BFR MAC CE is not received until the BFR timer expires, the UE may start the following procedure.
- The UE may retransmit the (SL) BFR MAC CE (e.g., for a purpose of indicating that there is a problem in a currently operating transmit beam or receive beam, or for a purpose of indicating that there is a problem in a reference signal related to a currently operating transmit beam or receive beam, or for a purpose of indicating a best transmit beam or a best receive beam for beam failure recovery because BFR is triggered) to retrigger the BFR process.
- The UE may consider the (SL) BFR process as a failure and may declare (or indicate or detect) (SL) RLF for a PC5 RRC connection for which (SL) BFR is triggered and may report (or indicate) to a base station or a peer UE (with cause: an (SL) RLF based on a beam failure recovery (BFR) failure).
- The UE may retrigger or re-perform at least one operation among beam sweeping, beam selection, or beam pairing.

In the present disclosure, a (sidelink) DRX configuration may include at least one parameter among the following.
- SL drx-onDurationTimer: the duration at the beginning of a SL DRX Cycle;
- SL drx-SlotOffset: the delay before starting the sl drx-onDurationTimer;
- SL drx-InactivityTimer: the duration after the PSCCH occasion in which a PSCCH indicates a new SL transmission for the MAC entity;
- SL drx-StartOffset: the subframe where the SL DRX cycle start;
- SL drx-Cycle: the SL DRX cycle;
- SL drx-HARQ-RTT-Timer (per HARQ process or per sidelink process): the minimum duration before an assignment for HARQ retransmission is expected by the MAC entity.
- SL drx-RetransmissionTimer (per HARQ process or per sidelink process): the maximum duration until a retransmission is received

In the present disclosure, the following (sidelink) DRX timers may be used for the following purposes.
- (sidelink) DRX onDuration timer: a duration in which a UE performing a (sidelink) DRX operation is to basically operate as an active time for receiving a PSCCH/PSSCH of a peer UE.
- (sidelink) DRX inactivity timer: a duration that extends the (sidelink) DRX onDuration duration, which is a duration in which a UE performing a (sidelink) DRX operation is to basically operate as an active time for receiving a PSCCH/PSSCH of a peer UE. For example, the (sidelink) DRX onDuration timer may be extended by the (sidelink) DRX inactivity timer duration. For example, when the UE receives PSCCH (first (1st) SCI and second (2nd) SCI) for a new TB from the peer UE or receives a new packet (a new PSSCH transmission), the UE may start the (sidelink) DRX inactivity timer to extend the (sidelink) DRX onDuration timer.
- (sidelink) DRX HARQ RTT timer: a duration in which a UE performing a (sidelink) DRX operation operates in a sleep mode until receiving a retransmission packet transmitted by a peer UE (e.g., or a PSSCH allocation). For example, when the UE starts the (sidelink) DRX HARQ RTT timer, the UE may determine that the peer UE will not transmit a (sidelink) retransmission packet to the UE until the (sidelink) DRX HARQ RTT timer expires and may operate in the sleep mode during the timer (or may not perform monitoring of (sidelink) channels/signals transmitted by a Tx UE).
- (sidelink) DRX retransmission timer: a duration in which a UE performing a (sidelink) DRX operation operates as an active time to receive a retransmission packet transmitted by a peer UE (e.g., or a PSSCH allocation). During the timer duration, the UE may monitor reception of a retransmission (sidelink) packet (e.g., or a PSSCH allocation) transmitted by the peer UE.

For example, names of timers (e.g., (sidelink) DRX onDuration timer, (sidelink) DRX inactivity timer, (sidelink) DRX HARQ RTT timer, (sidelink) DRX retransmission timer, etc.) are exemplary, and timers performing the same/similar function based on the content described in each timer may be considered as the same/similar timers regardless of their names.

For example, PSFCH reception may be performed. For example, the MAC entity may, for each PSSCH transmission, perform the HARQ-Based (sidelink) RLF Detection procedure. For example, the MAC entity may, for each PSSCH transmission, if the PSSCH transmission occurs for a pair of Source Layer-2 ID and Destination Layer-2 ID corresponding to a PC5-RRC connection which has been established by upper layers, perform the HARQ-Based (sidelink) RLF Detection procedure.

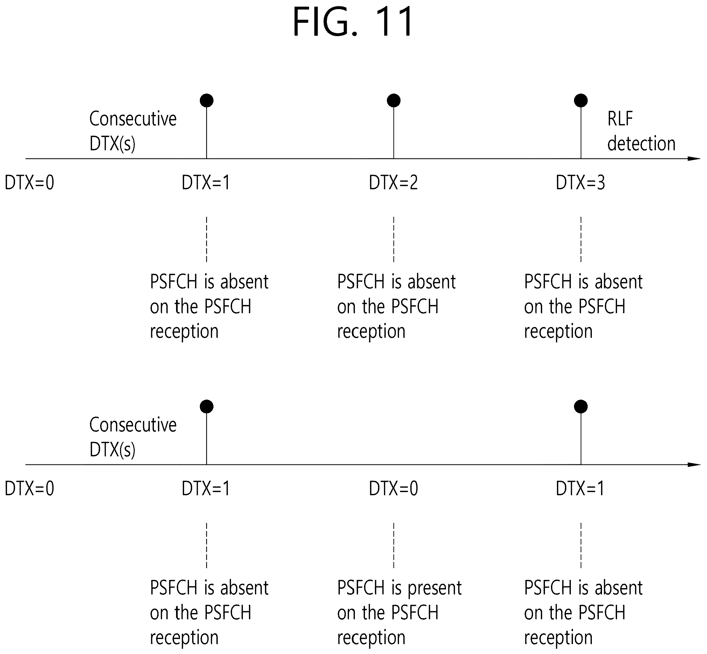

FIG. 11 shows a procedure related to RLF detection, based on an embodiment of the present disclosure. The embodiment of FIG. 11 may be combined with various embodiments of the present disclosure.

Referring to FIG. 11, for example, HARQ-based (sidelink) RLF detection may be performed.

For example, when a transmitting UE does not receive a physical feedback channel (e.g., PSFCH) (e.g., HARQ ACK or HARQ NACK) from a receiving UE after transmitting a physical control channel/physical shared channel (e.g., PSCCH/PSSCH), the transmitting UE may increment a discontinuous transmission (DTX) count by 1 and may declare (or indicate or detect) (SL) RLF when the DTX count reaches a threshold. For example, when the (SL) RLF is declared (or indicated or detected) for a unicast link, the UE may release a PC5 RRC connection for which the (SL) RLF is declared (or indicated or detected) and may report (or indicate) to upper layers (e.g., a V2X layer) a PC5 link identifier related to the released PC5 RRC connection. For example, the UE may report (or indicate) to a base station that an (SL) RLF has occurred to the base station. For example, when the UE reports (or indicates), the UE may report (or indicate), together, unicast link information (e.g., a destination Layer-2 ID) for which the RLF has occurred and a cause related to the (SL) RLF (e.g., (SL) RLF).

For example, the HARQ-based (sidelink) RLF detection procedure may be used to detect (sidelink) RLF based on a number of consecutive DTX on PSFCH reception occasions for a PC5-RRC connection.

For example, RRC may configure the following parameter to control HARQ-based (sidelink) RLF detection. For example, maximum DTX (e.g., (sl-)maxNumConsecutiveDTX) may be configured. For example, maximum DTX (e.g., (sl-)maxNumConsecutiveDTX) may indicate the maximum number of consecutive HARQ DTX before triggering (sidelink) RLF.

For example, the following UE variable may be used for HARQ-based (sidelink) RLF detection. For example, DTX (e.g., numConsecutiveDTX), which is maintained for each PC5-RRC connection, may be configured.

For example, the (sidelink) HARQ Entity may (re-)initialize numConsecutiveDTX to zero for each PC5-RRC connection which has been established by upper layers, if any, upon establishment of the PC5-RRC connection or (re)configuration of maximum DTX (e.g., (sl-)maxNumConsecutiveDTX). For example, as shown in FIG. 11, maximum DTX (e.g., (sl-)maxNumConsecutiveDTX) may be configured to 3. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, increment DTX (e.g., numConsecutiveDTX) by 1. For example, the (sidelink) HARQ Entity may, for each PSFCH reception occasion associated to the PSSCH transmission, if PSFCH reception is absent on the PSFCH reception occasion, increment DTX (e.g., numConsecutiveDTX) by 1.

For example, the (sidelink) HARQ Entity may, for each PSFCH reception occasion associated to the PSSCH transmission, indicate HARQ-based (sidelink) RLF detection to RRC. For example, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (sidelink) RLF detection to RRC. For example, the (sidelink) HARQ Entity may, for each PSFCH reception occasion associated to the PSSCH transmission, if PSFCH reception is absent on the PSFCH reception occasion, increment DTX (e.g., numConsecutiveDTX) by 1, if DTX (e.g., numConsecutiveDTX) reaches maximum DTX (e.g., (sl-)maxNumConsecutiveDTX), indicate HARQ-based (sidelink) RLF detection to RRC. For example, as shown in FIG. 11, maximum DTX (e.g., (sl-)maxNumConsecutiveDTX) may be configured to 3. For example, as shown in FIG. 11, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) of 3, indicate HARQ-based (sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, re-initialize DTX (e.g., numConsecutiveDTX) to zero. For example, the (sidelink) HARQ Entity may, for each PSFCH reception occasion associated to the PSSCH transmission, if PSFCH reception is not absent on the PSFCH reception occasion (e.g., else for "if PSFCH reception is absent on the PSFCH reception occasion"), re-initialize DTX (e.g., numConsecutiveDTX) to zero.

In FIG. 11, maximum DTX (e.g., (sl-)maxNumConsecutiveDTX) is shown as being configured to 3, but is not limited thereto. For example, maximum DTX (e.g., (sl-)maxNumConsecutiveDTX) may be (re)configured to a value other than 3.

In a multi-carrier operation or carrier aggregation (CA), there may be a plurality of carriers related to a PC5-RRC connection. There may be a problem related to whether to detect an RLF and to indicate an RLF to upper layers only when a maximum of a number of DTXs is detected in some carriers.

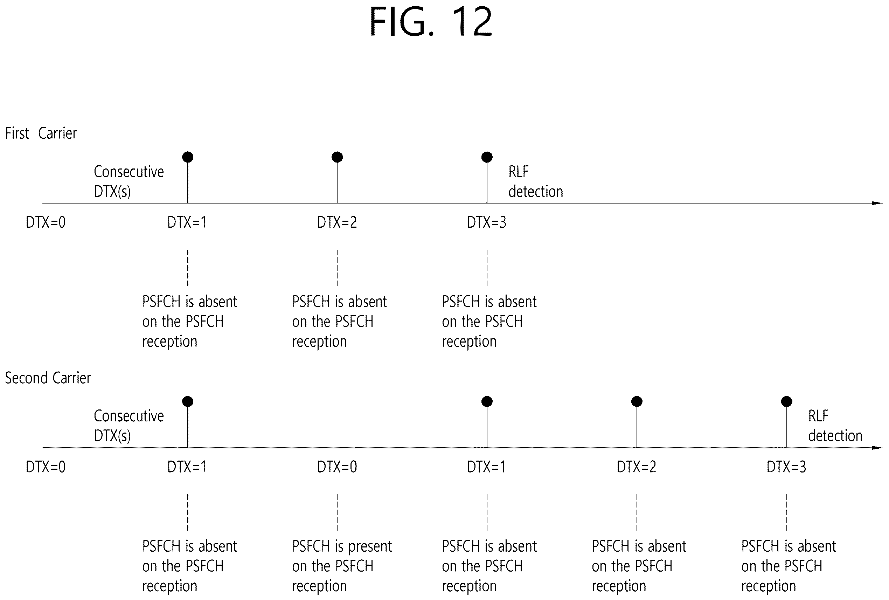

FIG. 12 shows a procedure related to RLF detection, based on an embodiment of the present disclosure. The embodiment of FIG. 12 may be combined with various embodiments of the present disclosure.

Referring to FIG. 12, for example, HARQ-based (sidelink) RLF detection may be performed.

For example, a UE supporting a multi-channel operation (e.g., a multi-carrier operation or carrier aggregation) in LTE V2X may select a specific (sidelink) carrier for transmitting (sidelink) data and may select available resources in the selected (sidelink) carrier and may transmit the (sidelink) data through the selected resources and the (sidelink) carrier.

According to the present disclosure, carrier (re-)selection and resource (re-)selection and unicast communication operation of a UE supporting multi-carrier may be proposed as follows.

For example, carrier (re-)selection and resource (re-)selection and unicast communication operation of a UE supporting multi-carrier may be proposed. For example, when a part of (SL) grant (re)transmission resources is triggered for reselection through pre-configured operation/message (e.g., pre-emption and/or re-evaluation and/or UL-SL prioritization-based (SL) (re)transmission omission and/or congestion control-based (SL) (re)transmission omission and/or inter-UE coordination message reception), a (sidelink) carrier reselection procedure may be configured not to be triggered (e.g., when such a rule is applied, it may be interpreted that a (sidelink) carrier reselection procedure is triggered only when reselection for all resources related to the (sidelink) grant is triggered).

For example, carrier (re-)selection and resource (re-)selection and unicast communication operation of a UE supporting multi-carrier may be proposed. For example, upon occurrence of (sidelink) MAC reset (e.g., and/or (sidelink) resource pool (e.g., or (sidelink) BWP) reconfiguration and/or (sidelink) carrier aggregation configurable (sidelink) carrier candidate set reconfiguration (e.g., or reconfiguration of a carrier set selected by (SL) carrier aggregation) and/or sync carrier reconfiguration and/or sync priority reconfiguration), (sidelink) carrier reselection (e.g., and/or resource reselection (e.g., on a related (sidelink) carrier)) may be triggered.

For example, carrier (re-)selection and resource (re-)selection and unicast communication operation of a UE supporting multi-carrier may be proposed. For example, a CBR threshold related to (sidelink) carrier (re)selection (e.g., and/or maintaining the existing (sidelink) carrier selection) check may be configured (independently) per service type (e.g., and/or priority) and/or QoS profile (e.g., latency, reliability, etc.) and/or LCH (e.g., or (sidelink) radio bearer or (sidelink) radio bearer kind/type (e.g., (SL) DRB and (SL) SRB)) and/or (sidelink) carrier and/or (sidelink) carrier type (e.g., (SL) RLM carrier, sync carrier) and/or (sidelink) resource pool (e.g., or (sidelink) BWP and/or a (sidelink) carrier (e.g., and/or BWP and/or resource pool) including PSFCH resources configured (e.g., or not configured)).

For example, carrier (re-)selection and resource (re-)selection and unicast communication operation of a UE supporting multi-carrier may be proposed. For example, depending on (SL) carrier aggregation (number of (sidelink) carriers) (e.g., and/or (SL) cast type (e.g., unicast, groupcast/broadcast) and/or (SL) HARQ feedback option (e.g., NACK only, ACK/NACK) and/or (sidelink) carrier index), a maximum value of DTX (e.g., an event that feedback for PSCCH/PSSCH transmission is not received) count related to (SL) RLF declaration may be configured (independently).

For example, carrier (re-)selection and resource (re-)selection and unicast communication operation of a UE supporting multi-carrier may be proposed. For example, when a V2X layer delivers a packet to an AS layer, it may be configured to also deliver information on a (sidelink) carrier on which the packet is to be transmitted (e.g., in the case of a packet that Release 16/17 UEs are to receive (e.g., together), one (sidelink) carrier index information that these UEs are monitoring).

For example, when (sidelink) carrier (re)selection used for (SL) grant creation related to HARQ feedback enabled data transmission is performed, it may be configured either to restrictively select only (sidelink) carrier(s) including a resource pool where PSFCH resources are configured (e.g., equal to or greater than a pre-configured number (e.g., 1)), and/or to include a pre-configured (e.g., minimum) number (e.g., 1) or more of (sidelink) carrier(s) including a resource pool where PSFCH resources are configured, while also allowing selection of (sidelink) carrier(s) that do not include a resource pool where PSFCH resources are configured. For example, in the above rule, "resource pool" may be restrictively interpreted as a "normal pool" (e.g., or "normal pool" and "exceptional pool").

For example, during (SL) carrier aggregation operation, a UE may expect that, per (sidelink) carrier (e.g., or on (sidelink) carrier(s) related to (SL) carrier aggregation), an exceptional pool where PSFCH resources are configured (e.g., equal to or greater than a pre-configured (e.g., minimum) number) is configured.

For example, in the case of a UE with limited TX capability, when performing resource selection for (sidelink) carrier(s) related to (SL) carrier aggregation, retransmission resources (e.g., time) related to a cleared (SL) grant (e.g., related to the relevant TB transmission) after receiving an ACK from an RX UE on a specific (sidelink) carrier may be configured not to be considered in checking whether its TX capability is reached when selecting resources on another (sidelink) carrier. For example, in the rule, an (SL) grant including retransmission resources cleared based on ACK reception that are not considered for whether TX capability is reached may be restrictively a single MAC PDU related (SL) grant (e.g., aperiodic resource reservation) (e.g., and/or multiple MAC PDU related (SL) grant (e.g., periodic resource reservation)).

For example, between UEs performing (SL) carrier aggregation-based (sidelink) unicast operation, the following operation may be configured to be performed (e.g., by (sidelink) carrier configuration).

For example, it may be configured to exchange capability information related to the number of PSFCHs simultaneously transmittable (e.g., and/or receivable) (e.g., based on per carrier or based on per band combination) (e.g., via pre-configured signaling (e.g., PC5 RRC)).

For example, a TX UE may be configured not to perform DTX counting (e.g., corresponding to its PSSCH transmission) when PSFCH RX operation is omitted due to performing PSFCH TX operation. For example, whether DTX counting is performed in this case may be configured (independently) according to service type (e.g., and/or priority and/or QoS profile (e.g., latency, reliability, etc.)) and/or congestion level (e.g., on a (sidelink) carrier) (e.g., CBR, RSSI, RSRQ, SINR).

For example, across multiple (sidelink) carriers related to (SL) carrier aggregation, when a TX UE performs PSSCH transmissions (e.g., including (e.g., some or all) HARQ feedback (FB) enabled data) and then receives the corresponding PSFCH transmissions equal to or greater than a pre-configured minimum threshold number/ratio (e.g., 1), it may be configured not to perform DTX counting for the corresponding PSSCH transmissions. For example, related thresholds may be configured (independently) according to service type (e.g., and/or priority and/or QoS profile (e.g., latency, reliability, etc.)) and/or congestion level (e.g., on a (sidelink) carrier) (e.g., CBR, RSSI, RSRQ, SINR). For example, the PSSCH transmissions to which the above rule applies (e.g., including (e.g., some or all) HARQ feedback enabled data) may be restrictively interpreted as having a PSFCH occasion at the same timing (e.g., and/or in the above rule the PSFCH reception timing may be restrictively interpreted as a PSFCH occasion at the same timing (e.g., in the time domain)).

For example, under (SL) carrier aggregation operation, when performing PSFCH TX-RX prioritization, if the number of PSFCH transmissions is (e.g., equal to or greater than a pre-configured threshold number) larger than the number of PSFCH receptions (e.g., or if the number of PSFCH transmissions is equal to or greater than a pre-configured threshold or if the number of PSFCH receptions is equal to or greater than a pre-configured threshold less), it may be configured to perform PSFCH transmission operation. For example, the rule may be restrictively applied only when PSFCH transmission priority (e.g., and/or the highest (e.g., or lowest) priority among multiple PSFCH transmissions) is identical to PSFCH reception priority (e.g., and/or the highest (e.g., or lowest) priority among multiple PSFCH receptions).

For example, an RX UE may be configured to deliver related information to a TX UE via pre-configured signaling (e.g., MAC CE) when PSFCH transmission is omitted due to applying a PSFCH prioritization rule. For example, the information may be configured with the number of PSFCHs whose transmission is omitted (e.g., and/or related (L2) Destination ID (e.g., and/or (L2) Source ID) and/or (e.g., time and/or frequency) resource positions related to the PSFCH whose transmission is omitted) (e.g., per carrier (e.g., (sidelink) carrier) or for multiple (sidelink) carriers).

For example, through negotiation between UEs (e.g., and/or signaling exchange (e.g., PC5 RRC, MAC CE)) (e.g., and/or from the network), one or more (sidelink) carriers (e.g., and/or for (SL) RLM use) on which (SL) DTX counting is performed may be selected, and such carriers may be restrictively interpreted as satisfying the following conditions. For example, when a (sidelink) carrier for such use is reconfigured, it may be configured that an (SL) DTX counting value on an existing (sidelink) carrier is initialized (e.g., and/or configured to use/maintain an (SL) DTX counting value on an existing (sidelink) carrier). For example, the (sidelink) carrier (for the above use) may be configured (independently) per service type (e.g., (L2) Destination) (e.g., and/or priority and/or QoS profile (e.g., latency, reliability, etc.) and/or congestion level).

For example, the (sidelink) carrier (for the above use) may be configured (independently) per (sidelink) carrier including a resource pool where PSFCH resources are configured (e.g., equal to or greater than a pre-configured (e.g., minimum) number).

For example, the (sidelink) carrier (for the above use) may be configured (independently) per (sidelink) carrier of a lowest (e.g., or highest) index (e.g., relatively or the most) among (sidelink) carriers used for (sidelink) unicast.

For example, the (sidelink) carrier (for the above use) may be configured (independently) per (sidelink) carrier on which packet transmission of the highest (e.g., or equal to or greater than a pre-configured threshold level) priority (e.g., service-related) among multiple services supported based on (sidelink) unicast is allowed.

For example, the (sidelink) carrier (for the above use) may be configured (independently) per (sidelink) carrier among (sidelink) carriers used for (sidelink) unicast whose congestion level (e.g., CBR, RSSI, RSRQ, SINR) (e.g., and/or (SL) quality (e.g., (SL) CSI)) is higher (e.g., or lower) than a pre-configured threshold level.

For example, the (sidelink) carrier (for the above use) may be configured (independently) per sync reference carrier (e.g., on which (SL) SSB transmission is performed).

For example, the (sidelink) carrier (for the above use) may be configured (independently) per (sidelink) carrier including a resource pool where PSFCH resources are configured (e.g., equal to or greater than a pre-configured (e.g., minimum) number), and/or per (sidelink) carrier of a lowest (e.g., or highest) index (e.g., relatively or the most) among (sidelink) carriers used for (sidelink) unicast, and/or per (sidelink) carrier on which packet transmission of the highest (e.g., or equal to or greater than a pre-configured threshold level) priority (e.g., service-related) among multiple services supported based on (sidelink) unicast is allowed, and/or per (sidelink) carrier among (sidelink) carriers used for (sidelink) unicast whose congestion level (e.g., CBR, RSSI, RSRQ, SINR) (e.g., and/or (SL) quality (e.g., (SL) CSI)) is higher (e.g., or lower) than a pre-configured threshold level, and/or per sync reference carrier (e.g., on which (SL) SSB transmission is performed).

For example, when (sidelink) carrier (re)selection used for (SL) grant creation related to HARQ feedback (FB) enabled data transmission is performed, it may be configured either to restrictively select only (sidelink) carrier(s) including a resource pool where PSFCH resources are configured (e.g., equal to or greater than a pre-configured number (e.g., 1)), and/or to include a pre-configured (e.g., minimum) number (e.g., 1) or more of (sidelink) carrier(s) including a resource pool where PSFCH resources are configured while also allowing selection of (sidelink) carrier(s) that do not include a resource pool where PSFCH resources are configured. For example, in the above rule, "resource pool" may be restrictively interpreted as a "normal pool" (e.g., or "normal pool" and "exceptional pool").

For example, during (SL) carrier aggregation operation, a UE may expect that, per (sidelink) carrier (e.g., or on (sidelink) carriers related to (SL) carrier aggregation), an exceptional pool where PSFCH resources are configured (e.g., equal to or greater than a pre-configured (e.g., minimum) number) is configured.

For example, in the case of a UE with limited TX capability, when performing resource selection for (sidelink) carrier(s) related to (SL) carrier aggregation, retransmission resources (e.g., time) related to a cleared (SL) grant (e.g., related to the relevant transport block transmission) after receiving an ACK from an RX UE on a specific (sidelink) carrier may be configured not to be considered in checking whether its TX capability is reached when selecting resources on another (sidelink) carrier. For example, in the rule, an (SL) grant including retransmission resources cleared based on ACK reception that are not considered for whether TX capability is reached may be restrictively a single MAC PDU related (SL) grant (e.g., aperiodic resource reservation) (e.g., and/or multiple MAC PDU related (SL) grant (e.g., periodic resource reservation)).

For example, between UEs performing (SL) carrier aggregation-based (sidelink) unicast operation, the following operation may be configured to be performed (e.g., by (sidelink) carrier configuration).

For example, it may be configured to exchange capability information related to the number of PSFCHs simultaneously transmittable (e.g., and/or receivable) (e.g., based on per (sidelink) carrier or based on per band combination) (e.g., and/or information on the type of (SL) mode in which itself operates (e.g., mode 1, mode 2) and/or connection state with a gNB/network (e.g., RRC_connected, idle, inactive)) (e.g., via pre-configured signaling (e.g., PC5 RRC)).

For example, a TX UE may be configured not to perform DTX counting (e.g., corresponding to its PSSCH transmission) when PSFCH RX operation is omitted due to performing PSFCH TX operation. For example, whether DTX counting is performed may be configured (independently) according to service type (e.g., and/or priority and/or QoS profile (e.g., latency, reliability, etc.)) and/or congestion level (e.g., on a (sidelink) carrier) (e.g., CBR, RSSI, RSRQ, SINR).

For example, across multiple (sidelink) carriers related to (SL) carrier aggregation, when a TX UE performs PSSCH transmissions (e.g., including (e.g., some or all) HARQ feedback enabled data) and then receives the corresponding PSFCH transmissions equal to or greater than a pre-configured minimum threshold number/ratio (e.g., 1), it may be configured not to perform DTX counting for the corresponding PSSCH transmissions (e.g., and/or to initialize a DTX counting value (e.g., 0 or a pre-configured value)). For example, related thresholds may be configured (independently) according to service type (e.g., and/or priority and/or QoS profile (e.g., latency, reliability, etc.)) and/or congestion level (e.g., on a (sidelink) carrier) (e.g., CBR, RSSI, RSRQ, SINR). For example, the PSSCH transmissions to which the above rule applies (e.g., including (e.g., some or all) HARQ feedback enabled data) may be restrictively interpreted as having a PSFCH occasion at the same timing (e.g., and/or in the above rule the PSFCH reception timing may be restrictively interpreted as a PSFCH occasion at the same timing (e.g., in the time domain)).

For example, under (SL) carrier aggregation operation, when performing PSFCH TX-RX prioritization, if the number of PSFCH transmissions is (e.g., equal to or greater than a pre-configured threshold number) larger than the number of PSFCH receptions (e.g., or if the number of PSFCH transmissions is equal to or greater than a pre-configured threshold or if the number of PSFCH receptions is equal to or greater than a pre-configured threshold less), it may be configured to perform PSFCH transmission operation. For example, the rule may be restrictively applied only when PSFCH transmission priority (e.g., and/or the highest (e.g., or lowest) priority among multiple PSFCH transmissions) is identical to PSFCH reception priority (e.g., and/or the highest (e.g., or lowest) priority among multiple PSFCH receptions).

For example, an RX UE may be configured to deliver related information to a TX UE via pre-configured signaling (e.g., MAC CE) when PSFCH transmission is omitted due to applying a PSFCH prioritization rule. For example, the information may be configured with the number of PSFCHs whose transmission is omitted (e.g., and/or related (L2) Destination ID (e.g., and/or (L2) Source ID) and/or (e.g., time and/or frequency) resource positions related to the PSFCH whose transmission is omitted) (e.g., per (sidelink) carrier or for multiple (sidelink) carriers).

For example, through negotiation between UEs (e.g., and/or signaling exchange (e.g., PC5 RRC, MAC CE)) (e.g., and/or from the network), one or more (sidelink) carriers (e.g., and/or for (SL) RLM use) on which (SL) DTX counting is performed may be selected, and such (sidelink) carriers may be restrictively interpreted as satisfying the following conditions. For example, when a (sidelink) carrier for such use is reconfigured, it may be configured that an (SL) DTX counting value on an existing (sidelink) carrier is initialized (e.g., 0 or a pre-configured value) (e.g., and/or configured to use/maintain an (SL) DTX counting value on an existing (sidelink) carrier). For example, a (sidelink) carrier for the above use may be configured (independently) per service type (e.g., (L2) Destination) (e.g., and/or priority and/or QoS profile (e.g., latency, reliability, etc.) and/or congestion level).

For example, the (sidelink) carrier (for the above use) may be configured (independently) per (sidelink) carrier including a resource pool where PSFCH resources are configured (e.g., equal to or greater than a pre-configured (e.g., minimum) number).

For example, the (sidelink) carrier (for the above use) may be configured (independently) per (sidelink) carrier of a lowest (e.g., or highest) index (e.g., relatively or the most) among (sidelink) carriers used for (sidelink) unicast.

For example, the (sidelink) carrier (for the above use) may be configured (independently) per (sidelink) carrier on which packet transmission of the highest (e.g., or equal to or greater than a pre-configured threshold level) priority (e.g., service-related) among multiple services supported based on (sidelink) unicast is allowed.

For example, the (sidelink) carrier (for the above use) may be configured (independently) per (sidelink) carrier among (sidelink) carriers used for (sidelink) unicast whose congestion level (e.g., CBR, RSSI, RSRQ, SINR) (e.g., and/or (SL) quality (e.g., (SL) CSI)) is higher (e.g., or lower) than a pre-configured threshold level.

For example, the (sidelink) carrier (for the above use) may be configured (independently) per sync reference carrier (e.g., on which (SL) SSB transmission is performed).

For example, the (sidelink) carrier (for the above use) may be configured (independently) per (sidelink) carrier including a resource pool where PSFCH resources are configured (e.g., equal to or greater than a pre-configured (e.g., minimum) number), and/or per (sidelink) carrier of a lowest (e.g., or highest) index (e.g., relatively or the most) among (sidelink) carriers used for (sidelink) unicast, and/or per (sidelink) carrier on which packet transmission of the highest (e.g., or equal to or greater than a pre-configured threshold level) priority (e.g., service-related) among multiple services supported based on (sidelink) unicast is allowed, and/or per (sidelink) carrier among (sidelink) carriers used for (sidelink) unicast whose congestion level (e.g., CBR, RSSI, RSRQ, SINR) (e.g., and/or (SL) quality (e.g., (SL) CSI)) is higher (e.g., or lower) than a pre-configured threshold level, and/or per sync reference carrier (e.g., on which (SL) SSB transmission is performed).

For example, a (sidelink) carrier on which transmission (e.g., and/or reception) of a pre-configured message is allowed may be pre-configured. For example, the (sidelink) carrier may be configured (independently) according to service type (e.g., and/or priority and/or QoS profile (e.g., latency, reliability, etc.)) and/or congestion level (e.g., on a (sidelink) carrier) (e.g., CBR, RSSI, RSRQ, SINR) and/or associated Release (e.g., Release 16/17, Release 18) and/or (SL) mode (e.g., mode 1, mode 2) (e.g., it may be that, when transmitting a packet that (e.g., must) be included/selected (e.g., one) for reception by (at least) legacy Release 16/17 UEs (e.g., or Release 18 mode 1 UEs or Release 18 UEs without (SL) carrier aggregation capability), a (sidelink) carrier is pre-configured (e.g., per service kind/type or per (L2) Destination ID)). For example, the message may be configured as PC5-S signaling (e.g., DCR, DCA, security setup message) (e.g., and/or PC5 RRC message and/or MAC CE message) (e.g., or a message related to a pre-configured radio bearer (e.g., type/kind) (e.g., SRB) (e.g., for forming a (sidelink) unicast session)).

For example, through negotiation between UEs (e.g., and/or signaling exchange (e.g., PC5 RRC, MAC CE)) (e.g., and/or from the network), one or more (sidelink) carriers (e.g., and/or for (SL) RLM use) on which HARQ feedback (e.g., PSFCH) transmission/reception is performed may be selected, and such carriers may be restrictively interpreted as satisfying the following conditions. For example, when such a (sidelink) carrier for the above use is reconfigured, it may be configured that an (SL) DTX counting value on an existing (sidelink) carrier (e.g., PSFCH transmission/reception carrier) is initialized (e.g., and/or configured to use/maintain an (SL) DTX counting value on an existing (sidelink) carrier). For example, the (sidelink) carrier (for the above use) (e.g., PSFCH transmission/reception carrier) may be configured (independently) per service type (e.g., (L2) Destination) (e.g., and/or priority and/or QoS profile (e.g., latency, reliability, etc.) and/or congestion level) and/or per (sidelink) priority.

For example, a UE may determine one or more (sidelink) carriers (e.g., and/or for (SL) RLM use) on which HARQ feedback (e.g., PSFCH) transmission/reception is performed when specific conditions are satisfied. For example, among multiple configured (e.g., or in-use) (sidelink) carriers, the UE may determine and select a (sidelink) carrier having the lowest (e.g., or highest) CBR measurement value as a (sidelink) carrier on which HARQ feedback (e.g., PSFCH) transmission/reception is performed (e.g., and/or for (SL) RLM use).

For example, a UE may determine one or more (sidelink) carriers (e.g., and/or for (SL) RLM use) on which HARQ feedback (e.g., PSFCH) transmission/reception is performed when specific conditions are satisfied. For example, among multiple configured (e.g., or in-use) (sidelink) carriers, the UE may determine and/or select a (sidelink) carrier whose CBR measurement value is less than or equal to (e.g., or greater than or equal to) a pre-configured CBR threshold as a (sidelink) carrier on which HARQ feedback (e.g., PSFCH) transmission/reception is performed (e.g., and/or for (SL) RLM use).

For example, a UE may determine one or more (sidelink) carriers (e.g., and/or for (SL) RLM use) on which HARQ feedback (e.g., PSFCH) transmission/reception is performed when specific conditions are satisfied. For example, among multiple configured (e.g., or in-use) (sidelink) carriers, the UE may determine and/or select a (sidelink) carrier whose quality (e.g., RSRP/RSRQ/SINR) quality measurement value is the highest (e.g., or lowest) as a (sidelink) carrier on which HARQ feedback (e.g., PSFCH) transmission/reception is performed (e.g., and/or for (SL) RLM use).

For example, a UE may determine one or more (sidelink) carriers (e.g., and/or for (SL) RLM use) on which HARQ feedback (e.g., PSFCH) transmission/reception is performed when specific conditions are satisfied. For example, among multiple configured (e.g., or in-use) (sidelink) carriers, the UE may determine and/or select a (sidelink) carrier whose quality (e.g., RSRP/RSRQ/SINR) quality measurement value is greater than or equal to a pre-configured threshold as a (sidelink) carrier on which HARQ feedback (e.g., PSFCH) transmission/reception is performed (e.g., and/or for (SL) RLM use).

For example, a UE may determine one or more (sidelink) carriers (e.g., and/or for (SL) RLM use) on which HARQ feedback (e.g., PSFCH) transmission/reception is performed when specific conditions are satisfied. For example, among multiple configured (e.g., or in-use) (sidelink) carriers, the UE may determine and/or select a (sidelink) carrier related to the (sidelink) carrier on which (sidelink) data of the highest (sidelink) priority among (sidelink) data being transmitted/received on multiple (sidelink) carriers is transmitted/received as a (sidelink) carrier on which HARQ feedback (e.g., PSFCH) transmission/reception is performed (e.g., and/or for (SL) RLM use).

For example, PSFCH reception may be performed. For example, the MAC entity may, for each PSSCH transmission, perform the HARQ-Based (sidelink) RLF Detection procedure. For example, the MAC entity may, for each PSSCH transmission, if the PSSCH transmission occurs for a pair of Source Layer-2 ID and Destination Layer-2 ID corresponding to a PC5-RRC connection which has been established by upper layers, perform the HARQ-Based (sidelink) RLF Detection procedure.

For example, the HARQ-based (sidelink) RLF detection procedure may be used to detect (sidelink) RLF based on a number of consecutive DTX on PSFCH reception occasions for a PC5-RRC connection. For example, for each carrier associated with a PC5-RRC connection, the HARQ-based (sidelink) RLF detection procedure may be used to detect (sidelink) RLF based on a number of consecutive DTX on PSFCH reception occasions for a PC5-RRC connection.

For example, RRC may configure the following parameter to control HARQ-based (sidelink) RLF detection. For example, maximum DTX (e.g., (sl-)maxNumConsecutiveDTX) may be configured. For example, maximum DTX (e.g., (sl-)maxNumConsecutiveDTX) may indicate the maximum number of consecutive HARQ DTX before triggering (sidelink) RLF.

For example, the following UE variable may be used for HARQ-based (sidelink) RLF detection. For example, DTX (e.g., numConsecutiveDTX), which is maintained for each PC5-RRC connection, may be configured. For example, DTX (e.g., numConsecutiveDTX), which is maintained per carrier per PC5-RRC connection, may be configured.

For example, the (sidelink) HARQ Entity may (re-)initialize numConsecutiveDTX to zero for each PC5-RRC connection which has been established by upper layers, if any, upon establishment of the PC5-RRC connection or (re)configuration of maximum DTX (e.g., (sl-)maxNumConsecutiveDTX). For example, for each carrier associated with a PC5-RRC connection, the (sidelink) HARQ Entity may (re-)initialize numConsecutiveDTX to zero for each PC5-RRC connection which has been established by upper layers, if any, upon establishment of the PC5-RRC connection or (re)configuration of maximum DTX (e.g., (sl-)maxNumConsecutiveDTX). For example, as shown in FIG. 12, maximum DTX (e.g., (sl-)maxNumConsecutiveDTX) may be configured to 3. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, increment DTX (e.g., numConsecutiveDTX) by 1. For example, for each carrier associated with a PC5-RRC connection, the (sidelink) HARQ Entity may, for each PSFCH reception occasion associated to the PSSCH transmission, increment DTX (e.g., numConsecutiveDTX) by 1. For example, for each carrier associated with a PC5-RRC connection, the (sidelink) HARQ Entity may, for each PSFCH reception occasion associated to the PSSCH transmission, if PSFCH reception is absent on the PSFCH reception occasion, increment DTX (e.g., numConsecutiveDTX) by 1. For example, for (SL) operation with shared spectrum channel access, UE may increase the DTX (e.g., numConsecutiveDTX) by 1 when the UE fails to detect the HARQ feedback on all the associated PSFCH resources.

For example, the (sidelink) HARQ Entity may, for each PSFCH reception occasion associated to the PSSCH transmission, trigger the TX carrier (re-)selection procedure. For example, for each carrier associated with a PC5-RRC connection, the (sidelink) HARQ Entity may, for each PSFCH reception occasion associated to the PSSCH transmission, trigger the TX carrier (re-)selection procedure. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, trigger the TX carrier (re-)selection procedure. For example, for each carrier associated with a PC5-RRC connection, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for a carrier applied for HARQ-based (sidelink) RLF detection, trigger the TX carrier (re-)selection procedure. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, if DTX (e.g., numConsecutiveDTX) reaches maximum DTX (e.g., (sl-)maxNumConsecutiveDTX) for a carrier applied for HARQ-based (sidelink) RLF detection, trigger the TX carrier (re-)selection procedure. For example, in trigger the TX carrier (re-)selection procedure, the TX carrier (re-)selection procedure may be triggered as described in TX carrier (re)selection below. For example, in more than one selected carrier, more than one carrier may be selected as described in TX carrier (re)selection below. For example, as shown in FIG. 12, for a first carrier among carriers associated with a PC5-RRC connection, the (sidelink) HARQ Entity may, for each PSFCH reception occasion associated to the PSSCH transmission, if the first carrier among more than one selected carrier is considered as the carriers for HARQ-based (sidelink) RLF detection, if DTX (e.g., numConsecutiveDTX) reaches maximum DTX (e.g., (sl-)maxNumConsecutiveDTX) of 3 for the first carrier, which is a carrier applied for HARQ-based (sidelink) RLF detection, trigger the TX carrier (re-)selection procedure. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, indicate HARQ-based (sidelink) carrier failure to RRC. For example, for each carrier associated with a PC5-RRC connection, the (sidelink) HARQ Entity may, for each PSFCH reception occasion associated to the PSSCH transmission, indicate HARQ-based (sidelink) carrier failure to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, indicate HARQ-based (sidelink) carrier failure to RRC. For example, for each carrier associated with a PC5-RRC connection, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for a carrier applied for HARQ-based (sidelink) RLF detection, indicate HARQ-based (sidelink) carrier failure to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, if DTX (e.g., numConsecutiveDTX) reaches maximum DTX (e.g., (sl-)maxNumConsecutiveDTX) for a carrier applied for HARQ-based (sidelink) RLF detection, indicate HARQ-based (sidelink) carrier failure to RRC. For example, in more than one selected carrier, more than one carrier may be selected as described in TX carrier (re)selection below. For example, as shown in FIG. 12, for a first carrier among carriers associated with a PC5-RRC connection, the (sidelink) HARQ Entity may, for each PSFCH reception occasion associated to the PSSCH transmission, if the first carrier among more than one selected carrier is considered as the carriers for HARQ-based (sidelink) RLF detection, if DTX (e.g., numConsecutiveDTX) reaches maximum DTX (e.g., (sl-)maxNumConsecutiveDTX) of 3 for the first carrier, which is a carrier applied for HARQ-based (sidelink) RLF detection, indicate HARQ-based (sidelink) carrier failure to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, indicate HARQ-based (sidelink) RLF detection to RRC. For example, for each carrier associated with a PC5-RRC connection, the (sidelink) HARQ Entity may, for each PSFCH reception occasion associated to the PSSCH transmission, indicate HARQ-based (sidelink) RLF detection to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, indicate HARQ-based (sidelink) RLF detection to RRC. For example, for each carrier associated with a PC5-RRC connection, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for all carrier applied for HARQ-based (sidelink) RLF detection, indicate HARQ-based (sidelink) RLF detection to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, if DTX (e.g., numConsecutiveDTX) reaches maximum DTX (e.g., (sl-)maxNumConsecutiveDTX) for all carrier applied for HARQ-based (sidelink) RLF detection, indicate HARQ-based (sidelink) RLF detection to RRC. For example, in more than one selected carrier, more than one carrier may be selected as described in TX carrier (re)selection below. For example, as shown in FIG. 12, for a first carrier and a second carrier, which are carriers associated with a PC5-RRC connection, the (sidelink) HARQ Entity may, for each PSFCH reception occasion associated to the PSSCH transmission, if the first carrier and the second carrier, which are more than one selected carrier is considered as the carriers for HARQ-based (sidelink) RLF detection, if DTX (e.g., numConsecutiveDTX) reaches maximum DTX (e.g., (sl-)maxNumConsecutiveDTX) of 3 for both the first carrier and the second carrier, which are carriers applied for HARQ-based (sidelink) RLF detection, indicate HARQ-based (sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (sidelink) RLF detection to RRC. For example, for each carrier associated with a PC5-RRC connection the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (sidelink) RLF detection to RRC. For example, for each carrier associated with a PC5-RRC connection the (sidelink) HARQ Entity may, for each PSFCH reception occasion associated to the PSSCH transmission, if more than one selected carrier is not considered as the carriers for HARQ-based (sidelink) RLF detection (e.g., else for "if more than one selected carrier is considered as the carriers for HARQ-based (sidelink) RLF detection"), if DTX (e.g., numConsecutiveDTX) reaches maximum DTX (e.g., (sl-)maxNumConsecutiveDTX), indicate HARQ-based (sidelink) RLF detection to RRC. For example, in more than one selected carrier, more than one carrier may be selected as described in TX carrier (re)selection below. For example, as shown in FIG. 11, maximum DTX (e.g., (sl-)maxNumConsecutiveDTX) may be configured to 3. For example, as shown in FIG. 11, for each carrier associated with a PC5-RRC connection, the (sidelink) HARQ Entity may, for each PSFCH reception occasion associated to the PSSCH transmission, if more than one selected carrier is not considered as the carriers for HARQ-based (sidelink) RLF detection (e.g., else for "if more than one selected carrier is considered as the carriers for HARQ-based (sidelink) RLF detection"), if DTX (e.g., numConsecutiveDTX) reaches maximum DTX (e.g., (sl-)maxNumConsecutiveDTX) of 3, indicate HARQ-based (sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, re-initialize DTX (e.g., numConsecutiveDTX) to zero. For example, for each carrier associated with a PC5-RRC connection, the (sidelink) HARQ Entity may, for each PSFCH reception occasion associated to the PSSCH transmission, re-initialize DTX (e.g., numConsecutiveDTX) to zero. For example, for each carrier associated with a PC5-RRC connection, the (sidelink) HARQ Entity may, for each PSFCH reception occasion associated to the PSSCH transmission, if PSFCH reception is not absent on the PSFCH reception occasion (e.g., else for "if PSFCH reception is absent on the PSFCH reception occasion"), re-initialize DTX (e.g., numConsecutiveDTX) to zero.

By not indicating an RLF when a maximum of a number of DTXs is detected only in some carriers, by indicating an RLF even when a maximum of a number of DTXs is not detected in all of a plurality of carriers, it is possible to prevent a PC5-RRC connection from being released due to an RLF being indicated even though there is an available carrier in which a maximum of a number of DTXs is not detected. By indicating an RLF only when a maximum of a number of DTXs is detected in a plurality of carriers, by indicating an RLF even when a maximum of a number of DTXs is not detected in all of a plurality of carriers, it is possible to prevent a PC5-RRC connection from being released due to an RLF being indicated even though there is an available carrier in which a maximum of a number of DTXs is not detected. By releasing a PC5-RRC connection only when a maximum of a number of DTXs is detected in a plurality of carriers, it is possible to prevent a PC5-RRC connection from being released even though there is an available carrier in which a maximum of a number of DTXs is not detected.

For example, TX carrier (re-)selection may be performed.

For example, the MAC entity may consider a CBR of a carrier to be one measured by lower layers if CBR measurement results are available. For example, the corresponding index (e.g., (sl-)defaultTxConfigIndex) configured by upper layers if CBR measurement results are not available.

If the TX carrier (re-)selection is triggered for a (sidelink) process, the MAC entity may consider the carrier as a candidate carrier for TX carrier (re-)selection for the concerned (sidelink) logical channel. If the TX carrier (re-)selection is triggered for a (sidelink) process, the MAC entity may, if there is no selected (sidelink) grant on any carrier allowed for the (sidelink) logical channel where data is available as indicated by upper layers, consider the carrier as a candidate carrier for TX carrier (re-)selection for the concerned (sidelink) logical channel. If the TX carrier (re-)selection is triggered for a (sidelink) process, the MAC entity may, for each carrier configured by upper layers associated with the concerned (sidelink) logical channel, consider the carrier as a candidate carrier for TX carrier (re-)selection for the concerned (sidelink) logical channel. If the TX carrier (re-)selection is triggered for a (sidelink) process, the MAC entity may, if the CBR of the carrier is below CBR threshold ((sl-)threshCBR-FreqReselection) associated with the priority of the (sidelink) logical channel, consider the carrier as a candidate carrier for TX carrier (re-)selection for the concerned (sidelink) logical channel. If the TX carrier (re-)selection is triggered for a (sidelink) process, the MAC entity may, taking into account of (sl-)HARQ-FeedbackEnabled for the (sidelink) logical channel, consider the carrier as a candidate carrier for TX carrier (re-)selection for the concerned (sidelink) logical channel. If the TX carrier (re-)selection is triggered for a (sidelink) process, the MAC entity may, in the case of multiple resource pools configured on a carrier, which specific resource pool is used to determine the CBR of this carrier is up to UE implementation, consider the carrier as a candidate carrier for TX carrier (re-)selection for the concerned (sidelink) logical channel. If the TX carrier (re-)selection is triggered for a (sidelink) process, the MAC entity may, taking into account of (sl-)HARQ-FeedbackEnabled for the (sidelink) logical channel, in the case of multiple resource pools configured on a carrier, which specific resource pool is used to determine the CBR of this carrier is up to UE implementation, consider the carrier as a candidate carrier for TX carrier (re-)selection for the concerned (sidelink) logical channel. If the TX carrier (re-)selection is triggered for a (sidelink) process, the MAC entity may, if there is no selected (sidelink) grant on any carrier allowed for the (sidelink) logical channel where data is available as indicated by upper layers, for each carrier configured by upper layers associated with the concerned (sidelink) logical channel, if the CBR of the carrier is below CBR threshold ((sl-)threshCBR-FreqReselection) associated with the priority of the (sidelink) logical channel, taking into account of (sl-)HARQ-FeedbackEnabled for the (sidelink) logical channel, in the case of multiple resource pools configured on a carrier, which specific resource pool is used to determine the CBR of this carrier is up to UE implementation, consider the carrier as a candidate carrier for TX carrier (re-)selection for the concerned (sidelink) logical channel.

If the TX carrier (re-)selection is triggered for a (sidelink) process, the MAC entity may select the carrier and the associated (e.g., associated with the carrier) pool of resources. If the TX carrier (re-)selection is triggered for a (sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), select the carrier and the associated (e.g., associated with the carrier) pool of resources. If the TX carrier (re-)selection is triggered for a (sidelink) process, the MAC entity may, for each (sidelink) logical channel, if any, where data is available and that are allowed on the carrier for which Tx carrier (re-)selection is triggered, select the carrier and the associated (e.g., associated with the carrier) pool of resources. If the TX carrier (re-)selection is triggered for a (sidelink) process, the MAC entity may, if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered, select the carrier and the associated (e.g., associated with the carrier) pool of resources. If the TX carrier (re-)selection is triggered for a (sidelink) process, the MAC entity may, if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered, select the carrier and the associated (e.g., associated with the carrier) pool of resources. If the TX carrier (re-)selection is triggered for a (sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered, select the carrier and the associated (e.g., associated with the carrier) pool of resources.

If the TX carrier (re-)selection is triggered for a (sidelink) process, the MAC entity may consider the carrier as a candidate carrier for TX carrier (re-)selection, for each carrier configured by upper layers on which the (sidelink) logical channel is allowed. If the TX carrier (re-)selection is triggered for a (sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), consider the carrier as a candidate carrier for TX carrier (re-)selection, for each carrier configured by upper layers on which the (sidelink) logical channel is allowed. If the TX carrier (re-)selection is triggered for a (sidelink) process, the MAC entity may, if data is not available, there is no (sidelink) logical channel that is allowed on the carrier for which Tx carrier (re-)selection is triggered, or if the CBR of the carrier is greater than or equal to threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered (e.g., else for "if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered"), consider the carrier as a candidate carrier for TX carrier (re-)selection, for each carrier configured by upper layers on which the (sidelink) logical channel is allowed. If the TX carrier (re-)selection is triggered for a (sidelink) process, the MAC entity may consider the carrier as a candidate carrier for TX carrier (re-)selection, for each carrier configured by upper layers on which the (sidelink) logical channel is allowed. If the TX carrier (re-)selection is triggered for a (sidelink) process, the MAC entity may, if the CBR of the carrier is below threshold ((sl-)threshCBR-FreqReselection) associated with the priority of the (sidelink) logical channel, consider the carrier as a candidate carrier for TX carrier (re-)selection, for each carrier configured by upper layers on which the (sidelink) logical channel is allowed. If the TX carrier (re-)selection is triggered for a (sidelink) process, the MAC entity may, if the CBR of the carrier is below threshold ((sl-)threshCBR-FreqReselection) associated with the priority of the (sidelink) logical channel, consider the carrier as a candidate carrier for TX carrier (re-)selection, for each carrier configured by upper layers on which the (sidelink) logical channel is allowed. If the TX carrier (re-)selection is triggered for a (sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), if data is not available, there is no (sidelink) logical channel that is allowed on the carrier for which Tx carrier (re-)selection is triggered, or if the CBR of the carrier is greater than or equal to threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered (e.g., else for "if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered"), if the CBR of the carrier is below threshold ((sl-)threshCBR-FreqReselection) associated with the priority of the (sidelink) logical channel, consider the carrier as a candidate carrier for TX carrier (re-)selection, for each carrier configured by upper layers on which the (sidelink) logical channel is allowed.

For example, the MAC entity may select one or more carrier(s) among the candidate carriers. For example, the MAC entity may select one or more carrier(s) and associated (e.g., associated with one or more carrier(s)) pool(s) of resources among the candidate carriers. For example, the MAC entity may select one or more carrier(s) among the candidate carriers with increasing order of CBR from the lowest CBR. For example, the MAC entity may select one or more carrier(s) and associated (e.g., associated with one or more carrier(s)) pool(s) of resources among the candidate carriers with increasing order of CBR from the lowest CBR. For example, the MAC entity may, if one or more carriers are considered as the candidate carriers for TX carrier (re-)selection, select one or more carrier(s) and associated (e.g., associated with one or more carrier(s)) pool(s) of resources among the candidate carriers with increasing order of CBR from the lowest CBR. For example, the MAC entity may, if Tx carrier (re-)selection is triggered, for each (sidelink) logical channel allowed on the carrier where data is available, select one or more carrier(s) and associated (e.g., associated with one or more carrier(s)) pool(s) of resources among the candidate carriers with increasing order of CBR from the lowest CBR. For example, the MAC entity may, if one or more carriers are considered as the candidate carriers for TX carrier (re-)selection, if Tx carrier (re-)selection is triggered, for each (sidelink) logical channel allowed on the carrier where data is available, select one or more carrier(s) and associated (e.g., associated with one or more carrier(s)) pool(s) of resources among the candidate carriers with increasing order of CBR from the lowest CBR.

For example, the MAC entity may select pool of resources (e.g., one pool of resources) configured with PSFCH resources among the pools of resources. For example, the MAC entity may, if (sl-)HARQ-FeedbackEnabled is set to enabled for the (sidelink) logical channel, select pool of resources (e.g., one pool of resources) configured with PSFCH resources among the pools of resources. For example, the MAC entity may, if (sl-)HARQ-FeedbackEnabled is set to enabled for the (sidelink) logical channel, select pool of resources (e.g., one pool of resources) configured with PSFCH resources among the pools of resources except the pool(s) in configuration related to discovery of a resource pool (e.g., (sl-)BWP-DiscPoolConfig or (sl-)BWP-DiscPoolConfigCommon), if configured. For example, the MAC entity may, select one or more carrier(s) and associated (e.g., associated with one or more carrier(s)) pool(s) of resources among the candidate carriers, if (sl-)HARQ-FeedbackEnabled is set to enabled for the (sidelink) logical channel, select pool of resources (e.g., one pool of resources) configured with PSFCH resources among the pools of resources except the pool(s) in configuration related to discovery of a resource pool (e.g., (sl-)BWP-DiscPoolConfig or (sl-)BWP-DiscPoolConfigCommon), if configured.

For example, the MAC entity may select any pool of resources among the pools of resources. For example, the MAC entity may, if (sl-)HARQ-FeedbackEnabled is set to disabled for the (sidelink) logical channel, select any pool of resources among the pools of resources. For example, the MAC entity may, if (sl-)HARQ-FeedbackEnabled is set to disabled for the (sidelink) logical channel, select any pool of resources among the pools of resources except the pool(s) in configuration related to discovery of a resource pool (e.g., (sl-)BWP-DiscPoolConfig or (sl-)BWP-DiscPoolConfigCommon), if configured. For example, the MAC entity may, select one or more carrier(s) and associated (e.g., associated with one or more carrier(s)) pool(s) of resources among the candidate carriers, if (sl-)HARQ-FeedbackEnabled is set to disabled for the (sidelink) logical channel, select any pool of resources among the pools of resources except the pool(s) in configuration related to discovery of a resource pool (e.g., (sl-)BWP-DiscPoolConfig or (sl-)BWP-DiscPoolConfigCommon), if configured.

For example, it may be left to UE implementation how many carriers to select based on UE capability.

For example, it may be left to UE implementation to determine the (sidelink) logical channels among the (sidelink) logical channels where data is available and that are allowed on the carrier for which Tx carrier (re-) selection is triggered.

**In** FIG. 12, maximum DTX (e.g., (sl-)maxNumConsecutiveDTX) is shown as being configured to 3, but is not limited thereto. For example, maximum DTX (e.g., (sl-)maxNumConsecutiveDTX) may be (re)configured to a value other than 3.

According to an embodiment of the present disclosure, after completing PC5 unicast link setup of a UE's V2X layer, the V2X layer may deliver to the access stratum (AS) layer unicast (sidelink) carrier configuration information mapped to a Source Layer-2 ID/Destination Layer-2 ID pair related to the completed PC5 unicast link setup (e.g., ID(s) that the UE has autonomously reselected as its Source Layer-2 ID after transmission/reception of a direct communication request message) (e.g., or a PC5 link identifier), as unicast (sidelink) carrier configuration (e.g., carrier configuration on which (sidelink) data/signal transmission/reception is allowed on a PC5 unicast link related to a Source Layer-2 ID/Destination Layer-2 ID pair or a PC5 link identifier). For example, the AS layer may select carrier(s) to be used on the corresponding unicast link (e.g., or a PC5 RRC connection related to the unicast link) based on the carrier configuration information received from the V2X layer, and may perform (sidelink) communication on the corresponding carrier(s).

According to an embodiment of the present disclosure, after completing PC5 unicast link setup of a UE's V2X layer, the V2X layer may deliver to the AS layer a TX profile including unicast (sidelink) carrier configuration information mapped to a Source Layer-2 ID/Destination Layer-2 ID pair related to the completed PC5 unicast link setup (e.g., ID(s) that the UE has autonomously reselected as its Source Layer-2 ID after transmission/reception of a direct communication request message) (e.g., or a PC5 link identifier), as unicast (sidelink) carrier configuration (e.g., carrier configuration on which (sidelink) data/signal transmission/reception is allowed on a PC5 unicast link related to a Source Layer-2 ID/Destination Layer-2 ID pair or a PC5 link identifier). For example, the AS layer may select carrier(s) to be used on the corresponding unicast link (e.g., or a PC5 RRC connection related to the unicast link) based on the TX profile (e.g., TX profile including carrier configuration information) received from the V2X layer, and may perform (sidelink) communication on the corresponding carrier(s).

For example, for a given pair of source and destination Layer-2 IDs, there may be multiple radio bearers. For example, for a given pair of source and destination Layer-2 IDs, there may be multiple radio bearers, each corresponding to a different (PC5) QoS level. For example, The AS layer may determine the mapping of multiple (PC5) QoS Flows to the same radio bearer based on the information provided. For example, the L2 link may go to all UEs in proximity identified by the destination Layer-2 ID. For example, for broadcast and groupcast mode communication, the L2 link may go to all UEs in proximity identified by the destination Layer-2 ID. For example, the carrier(s) that can be used for transmitting data may be provided by the V2X layer per QoS flow.

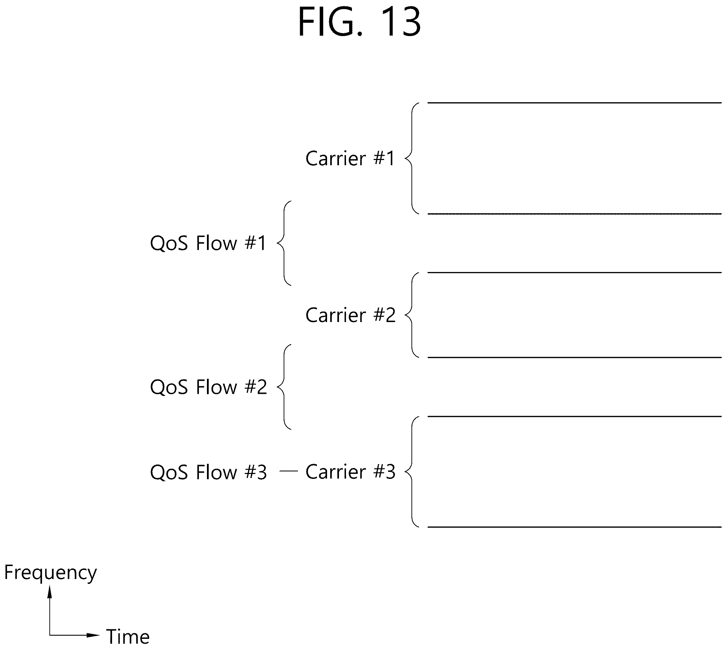

FIG. 13 shows an example of a relationship between a QoS flow and a carrier, based on an embodiment of the present disclosure. The embodiment of FIG. 13 may be combined with various embodiments of the present disclosure.

Referring to FIG. 13, for example, in carrier aggregation (CA), two or more component carriers (CCs) are aggregated. For example, a UE may simultaneously receive or transmit on one or multiple CCs depending on its capabilities.

For example, (NR) (PC5) carrier aggregation operations may be supported. For example, for NR based unicast, groupcast and broadcast mode communication over (PC5) reference point, (PC5) carrier aggregation (CA) operations may be supported. For example, the V2X layer may provide the radio frequencies (e.g., carriers) to the AS layer based on the configuration.

For example, the V2X layer may provide the (NR) (e)Tx profiles to the AS layer, e.g. when providing other information such as the radio frequencies (e.g., carriers) for the (PC5) QoS Flow for transmission. For example, when there is no (NR) (e)Tx profile available to be mapped for the (PC5) QoS flow for transmission, the V2X layer may not provide (NR) (e)Tx profile to the AS layer.

For example, for broadcast or groupcast, the AS layer may determine whether the NR (PC5) CA operation is needed, e.g. based on the (NR) (e)Tx profile, the radio frequencies for the (PC5) QoS Flow for transmission may be provided by the V2X layer.

For unicast, two UEs may exchange (SL) CA related capability in the AS layer for the NR (PC5) CA operation.

For example, (NR) (e)Tx profile may be the enhanced transmission mechanism or format to be used by the UE over NR (PC5) RAT (e.g. related to (PC5) carrier aggregation).

For example, carrier aggregation (CA) (in sidelink) may be supported (for mode 2 and in V2X case only). For example, a UE (using mode 2 resource allocation) may perform carrier (re)selection and may select one or more carriers (used for sidelink).

For example, the carrier(s) that can be used for transmitting data may be provided by the V2X layer per QoS flow. For example, LCP may ensure that data from a sidelink radio bearer (SLRB) is transmitted on a carrier for which all mapped QoS flows are allowed to use the carrier. For example, the carrier(s) that can be used for transmitting data may be provided by the V2X layer per QoS flow, and LCP may ensure that data from a SLRB is transmitted on a carrier for which all mapped QoS flows are allowed to use the carrier.

According to an embodiment of the present disclosure, after completing PC5 unicast link setup of a UE's V2X layer, the V2X layer may deliver to the AS layer a QoS profile including unicast (sidelink) carrier configuration information mapped to a Source Layer-2 ID/Destination Layer-2 ID pair related to the completed PC5 unicast link setup (e.g., ID(s) that the UE has autonomously reselected as its Source Layer-2 ID after transmission/reception of a direct communication request message) (e.g., or a PC5 link identifier), as unicast (sidelink) carrier configuration (e.g., carrier configuration on which (sidelink) data/signal transmission/reception is allowed on a PC5 unicast link related to a Source Layer-2 ID/Destination Layer-2 ID pair or a PC5 link identifier). For example, the AS layer may select carrier(s) to be used on the corresponding unicast link (e.g., or a PC5 RRC connection related to the unicast link) based on the QoS profile (e.g., a TX profile including carrier configuration information) received from the V2X layer, and may perform (sidelink) communication on the corresponding carrier(s). For example, carrier(s) to be used for (sidelink) unicast may be managed per PC5 5QI (e.g., PQI) (e.g., or PFI (e.g., PC5 QoS flow identifier) or QoS profile or QFI (e.g., QoS flow identifier)) and delivered to the AS layer, and the AS layer may also manage a mapped (sidelink) unicast carrier(s) per PQI (e.g., or PFI (e.g., PC5 QoS flow identifier) or QoS profile or QFI (e.g., QoS flow identifier)).

For example, as shown in FIG. 13, for QoS flow #1, carrier #1 and carrier #2 may be provided. For example, as shown in FIG. 13, carrier #1 and carrier #2 that may be used to transmit data may be provided by the V2X layer in QoS flow #1. For example, as shown in FIG. 13, for QoS flow #2, carrier #2 and carrier #3 may be provided. For example, as shown in FIG. 13, carrier #2 and carrier #3 that may be used to transmit data may be provided by the V2X layer in QoS flow #2. For example, as shown in FIG. 13, for QoS flow #3, carrier #3 may be provided. For example, as shown in FIG. 13, carrier #3 that may be used to transmit data may be provided by the V2X layer in QoS flow #3. For example, although only QoS flow #1, QoS flow #2, and QoS flow #3 are shown in FIG. 13, the present disclosure is not limited thereto. For example, although only carrier #1, carrier #2, and carrier #3 are shown in FIG. 13, the present disclosure is not limited thereto.

By dedicating carriers to specific QoS flows, the network can optimize reliability and efficiency. This configuration can minimize the risk of congestion and interference among different types of data flows and thus can improve the reliability and efficiency of the network. By allocating carriers based on the specific requirements of each QoS flow, the system can ensure that resources are not wasted on low-priority data that does not require high bandwidth or low latency. This targeted allocation can help manage scarce resources more efficiently and can enable the network to support data transmission at larger capacity without additional frequency or bandwidth.

For example, (for groupcast and broadcast,) when the V2X layer provides multiple carriers in QoS flow to carrier mapping information to the AS, TX profile may be used to indicate whether the transmission corresponding to the QoS flow is backward compatible or not. For example, when backward compatibility is needed, the TX UE may use only the legacy carrier without PDCP duplication, or may use PDCP duplication with at least the legacy carrier

For example, (for groupcast and broadcast,) carrier selection is performed at MAC layer, depending on the CBR of the configured carriers and logical channel priority.

For example, for a given pair of source and destination Layer-2 IDs, there may be multiple radio bearers. For example, for a given pair of source and destination Layer-2 IDs, there may be multiple radio bearers, each corresponding to a different (PC5) QoS level. For example, The AS layer may determine the mapping of multiple (PC5) QoS Flows to the same radio bearer based on the information provided. For example, the L2 link may go to all UEs in proximity identified by the destination Layer-2 ID. For example, for broadcast and groupcast mode communication, the L2 link may go to all UEs in proximity identified by the destination Layer-2 ID.

For example, (sidelink) packet duplication may be supported for (sidelink) CA and may be performed at packet data convergence protocol (PDCP) layer. For example, for (sidelink) packet duplication for transmission, a packet data convergence protocol (PDCP) protocol data unit (PDU) may be duplicated at the packet data convergence protocol (PDCP) entity. For example, the duplicated packet data convergence protocol (PDCP) protocol data units (PDUs) of the same packet data convergence protocol (PDCP) entity may be submitted to two different RLC entities and may be associated to two different (sidelink) logical channels respectively. For example, the duplicated packet data convergence protocol (PDCP) protocol data units (PDUs) of the same packet data convergence protocol (PDCP) entity may only be allowed to be transmitted on different (sidelink) carriers. For example, for a (SL) data radio bearer (DRB), (sidelink) packet duplication may be (pre)configured in the bearer configuration if the TX profile indicates backward compatibility is needed. For example, for a (SL) data radio bearer (DRB), (sidelink) packet duplication may be (pre)configured in the bearer configuration if the TX profile indicates backward compatibility is not needed. For a (SL) data radio bearer (DRB), (sidelink) packet duplication may be decided by the TX UE if the TX profile indicates backward compatibility is needed. For example, for applicable (SL) signaling radio bearers (SRBs), whether to use duplication (e.g., (sidelink) packet duplication) may be decided by the TX UE. For example, (in unicast,) the TX UE may send the duplication (e.g., (sidelink) packet duplication) configuration to the RX UE in PC5-RRC.

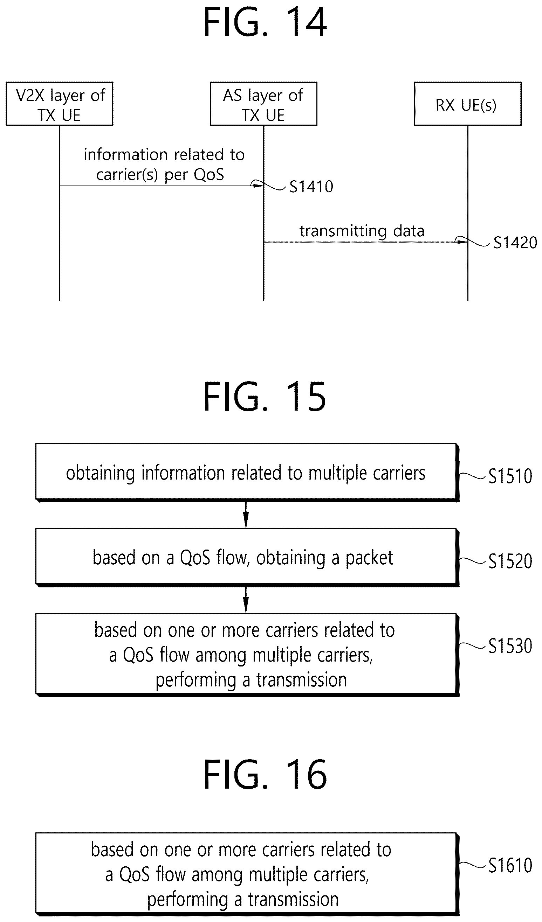

FIG. 14 shows an example of a procedure for providing a QoS flow, based on an embodiment of the present disclosure. The embodiment of FIG. 14 may be combined with various embodiments of the present disclosure.

Referring to FIG. 14, for example, in carrier aggregation (CA), two or more component carriers (CCs) are aggregated. For example, a UE may simultaneously receive or transmit on one or multiple CCs depending on its capabilities.

For example, (NR) (PC5) carrier aggregation operations may be supported. For example, for NR based unicast, groupcast and broadcast mode communication over (PC5) reference point, (PC5) carrier aggregation (CA) operations may be supported. For example, the V2X layer may provide the radio frequencies (e.g., carriers) to the AS layer based on the configuration.

For example, the V2X layer may provide the (NR) (e)Tx profiles to the AS layer, e.g. when providing other information such as the radio frequencies (e.g., carriers) for the (PC5) QoS Flow for transmission. For example, when there is no (NR) (e)Tx profile available to be mapped for the (PC5) QoS flow for transmission, the V2X layer may not provide (NR) (e)Tx profile to the AS layer.

For example, for broadcast or groupcast, the AS layer may determine whether the NR (PC5) CA operation is needed, e.g. based on the (NR) (e)Tx profile, the radio frequencies for the (PC5) QoS Flow for transmission may be provided by the V2X layer.

For unicast, two UEs may exchange (SL) CA related capability in the AS layer for the NR (PC5) CA operation.

For example, (NR) (e)Tx profile may be the enhanced transmission mechanism or format to be used by the UE over NR (PC5) RAT (e.g. related to (PC5) carrier aggregation).

For example, carrier aggregation (CA) (in sidelink) may be supported (for mode 2 and in V2X case only). For example, a UE (using mode 2 resource allocation) may perform carrier (re)selection and may select one or more carriers (used for sidelink).

For example, the carrier(s) that can be used for transmitting data may be provided by the V2X layer per QoS flow. For example, LCP may ensure that data from a sidelink radio bearer (SLRB) is transmitted on a carrier for which all mapped QoS flows are allowed to use the carrier. For example, the carrier(s) that can be used for transmitting data may be provided by the V2X layer per QoS flow, and LCP may ensure that data from a SLRB is transmitted on a carrier for which all mapped QoS flows are allowed to use the carrier.

According to an embodiment of the present disclosure, after completing PC5 unicast link setup of a UE's V2X layer, the V2X layer may deliver to the AS layer a QoS profile including unicast (sidelink) carrier configuration information mapped to a Source Layer-2 ID/Destination Layer-2 ID pair related to the completed PC5 unicast link setup (e.g., ID(s) that the UE has autonomously reselected as its Source Layer-2 ID after transmission/reception of a direct communication request message) (e.g., or a PC5 link identifier), as unicast (sidelink) carrier configuration (e.g., carrier configuration on which (sidelink) data/signal transmission/reception is allowed on a PC5 unicast link related to a Source Layer-2 ID/Destination Layer-2 ID pair or a PC5 link identifier). For example, the AS layer may select carrier(s) to be used on the corresponding unicast link (e.g., or a PC5 RRC connection related to the unicast link) based on the QoS profile (e.g., a TX profile including carrier configuration information) received from the V2X layer, and may perform (sidelink) communication on the corresponding carrier(s). For example, carrier(s) to be used for (sidelink) unicast may be managed per PC5 5QI (e.g., PQI) (e.g., or PFI (e.g., PC5 QoS flow identifier) or QoS profile or QFI (e.g., QoS flow identifier)) and delivered to the AS layer, and the AS layer may also manage a mapped (sidelink) unicast carrier(s) per PQI (e.g., or PFI (e.g., PC5 QoS flow identifier) or QoS profile or QFI (e.g., QoS flow identifier)).

For example, in step S1410, the V2X layer of a TX UE may provide information related to carrier(s) per QoS to the AS layer of the TX UE. For example, in step S1410, information related to carrier(s) per QoS that may be used to transmit data may be provided by the V2X layer of the TX UE to the AS layer of the TX UE. For example, in step S1420, the AS layer of the TX UE may transmit data to RX UE(s). For example, in step S1420, based on the information related to carrier(s) per QoS provided by the V2X layer, the AS layer of the TX UE may transmit data to the RX UE(s).

By dedicating carriers to specific QoS flows, the network can optimize reliability and efficiency. This configuration can minimize the risk of congestion and interference among different types of data flows and thus can improve the reliability and efficiency of the network. By allocating carriers based on the specific requirements of each QoS flow, the system can ensure that resources are not wasted on low-priority data that does not require high bandwidth or low latency. This targeted allocation can help manage scarce resources more efficiently and can enable the network to support data transmission at larger capacity without additional frequency or bandwidth.

For example, (for groupcast and broadcast,) when the V2X layer provides multiple carriers in QoS flow to carrier mapping information to the AS, TX profile may be used to indicate whether the transmission corresponding to the QoS flow is backward compatible or not. For example, when backward compatibility is needed, the TX UE may use only the legacy carrier without PDCP duplication, or may use PDCP duplication with at least the legacy carrier

For example, (for groupcast and broadcast,) carrier selection is performed at MAC layer, depending on the CBR of the configured carriers and logical channel priority.

For example, (sidelink) packet duplication may be supported for (sidelink) CA and may be performed at packet data convergence protocol (PDCP) layer. For example, for (sidelink) packet duplication for transmission, a packet data convergence protocol (PDCP) protocol data unit (PDU) may be duplicated at the packet data convergence protocol (PDCP) entity. For example, the duplicated packet data convergence protocol (PDCP) protocol data units (PDUs) of the same packet data convergence protocol (PDCP) entity may be submitted to two different RLC entities and may be associated to two different (sidelink) logical channels respectively. For example, the duplicated packet data convergence protocol (PDCP) protocol data units (PDUs) of the same packet data convergence protocol (PDCP) entity may only be allowed to be transmitted on different (sidelink) carriers. For example, for a (SL) data radio bearer (DRB), (sidelink) packet duplication may be (pre)configured in the bearer configuration if the TX profile indicates backward compatibility is needed. For example, for a (SL) data radio bearer (DRB), (sidelink) packet duplication may be (pre)configured in the bearer configuration if the TX profile indicates backward compatibility is not needed. For a (SL) data radio bearer (DRB), (sidelink) packet duplication may be decided by the TX UE if the TX profile indicates backward compatibility is needed. For example, for applicable (SL) signaling radio bearers (SRBs), whether to use duplication (e.g., (sidelink) packet duplication) may be decided by the TX UE. For example, (in unicast,) the TX UE may send the duplication (e.g., (sidelink) packet duplication) configuration to the RX UE in PC5-RRC.

According to an embodiment of the present disclosure, in a multi-carrier unicast operation, when UE-A (e.g., Source Layer-2 ID "A" and Destination Layer-2 ID "B") is performing unicast communication with UE-B, if UE-A intends to perform unicast communication by changing the service with UE-B to a different service based on the same ID pair (e.g., Source Layer-2 ID "A" and Destination Layer-2 ID "B") (e.g., changing or modifying from service "X" to service "Y"), carrier switching may be triggered. For example, upon service change (e.g., from service "X" to service "Y"), UE-A may perform (sidelink) data/signal transmission/reception operation for service "Y" not on the (sidelink) carrier mapped to service "X" (e.g., carrier "1"), but may reselect a new carrier (e.g., carrier "2") to perform (sidelink) data/signal transmission/reception operation for service "Y" based on the same ID pair (e.g., Source Layer-2 ID "A" and Destination Layer-2 ID "B"). For example, when carrier switching is triggered, UE-A may notify UE-B of the reselected carrier information (e.g., carrier "2") (e.g., via SCI, MAC CE, or PC5-RRC message). For example, when UE-A notifies UE-B of the reselected carrier information, UE-A may also notify information on a QoS profile or PC5 5QI (e.g., PQI) or PC5 QoS flow identifier (e.g., PFI) or QoS flow identifier (e.g., QFI) that is mapped to the reselected carrier.

According to an embodiment of the present disclosure, the following UE operation may be proposed for communication between a UE supporting multi-carrier operation (e.g., a UE supporting Release 18 (sidelink) carrier aggregation operation) and a UE supporting only single-carrier operation (e.g., a UE without Release 18 carrier aggregation capability or a Release 17 UE or a Release 16 UE). For example, a UE supporting multi-carrier operation performs (sidelink) communication (e.g., unicast or groupcast or broadcast) through (sidelink) carrier "A" (e.g., a (sidelink) carrier allowed (e.g., or available) for (sidelink) communication for both the UE supporting multi-carrier operation and the UE supporting single-carrier operation) to support a specific (sidelink) service (e.g., unicast/and/or groupcast/and/or broadcast service "X"), and when the UE supporting multi-carrier operation changes (e.g., or has changed) the service to another service (e.g., unicast/and/or groupcast/and/or broadcast service "Y") or adds another different service (e.g., unicast/and/or groupcast/and/or broadcast service "Y") to an existing (sidelink) session (e.g., unicast or groupcast or broadcast), when performing (sidelink) communication for the service to be changed (e.g., or added) (e.g., unicast/and/or groupcast/and/or broadcast service "Y"), it may have to perform the (sidelink) communication (e.g., transmission or reception) for supporting the service on a supported (e.g., or allowed) side carrier (e.g., (sidelink) carrier "B"). For example, the UE supporting multi-carrier operation may trigger carrier (re-)selection operation to (re-)select a (sidelink) carrier (e.g., (sidelink) carrier "B") for performing (sidelink) communication for the service to be changed (e.g., or added) (e.g., unicast, groupcast, or broadcast service "Y"). For example, since a UE supporting single-carrier operation cannot perform communication with the UE supporting multi-carrier operation through multiple carriers, the UE supporting multi-carrier operation may have to deliver to the UE supporting single-carrier operation information on the reselected carrier "Y" (e.g., information that a (sidelink) service mapped to carrier "Y" or a Destination Layer-2 ID or a pair of Source Layer-2 ID/Destination Layer-2 ID is also delivered) (e.g., via SCI, MAC CE, or PC5-RRC message). For example, when the UE supporting single-carrier operation receives information on the reselected carrier from the UE supporting multi-carrier operation, the UE supporting single-carrier operation may perform (sidelink) communication (e.g., transmission/reception) with the UE supporting multi-carrier operation on the changed service through the corresponding carrier. For example, as another embodiment of the above embodiment, the UE supporting multi-carrier operation may stop the ongoing service of the UE supporting single-carrier operation and perform a change to another new service and, when indicating service replacement and switching to a service-related (sidelink) carrier to the UE supporting single-carrier operation, may trigger a PC5 RRC reconfiguration process to perform reconfiguration for the changed service (e.g., setting a (sidelink) DRB for the reselected service, setting a carrier related to the reselected service).

According to an embodiment of the present disclosure, when a UE's V2X layer establishes a PC5 unicast link (e.g., a PC5-S link) with a peer UE, the V2X layer may deliver to the AS layer (sidelink) carrier information to be used for the PC5 unicast link (e.g., or a PC5 link identifier or a pair of Source Layer-2 ID/Destination Layer-2 ID). For example, the (sidelink) carrier information may include the following information.

For example, the (sidelink) carrier information may include a PC5 link identifier: a PC5 unicast link identifier.

For example, the (sidelink) carrier information may include a pair of Source Layer-2 ID/Destination Layer-2 ID: Layer-2 ID information of a UE that established a PC5 unicast link.

For example, the (sidelink) carrier information may include PC5 5QI (e.g., PQI) or a PC5 QoS flow identifier (e.g., PFI) or a QoS flow identifier (e.g., QFI) or a QoS profile: unicast service QoS information allowed (e.g., or served) on a PC5 unicast link.

For example, the (sidelink) carrier information may include a TX profile: profile information indicating whether the UE's multi-carrier operation is supported or not (e.g., supported or not supported).

For example, the (sidelink) carrier information may include (sidelink) carrier information: a (sidelink) carrier that the UE will use (e.g., or is allowed for the UE) for (sidelink) communication on a PC5 unicast link related to a PC5 link identifier (e.g., or a pair of Source Layer-2 ID/Destination Layer-2 ID or PQI or PFI or QFI or QoS profile or TX profile).

The operation of the present disclosure may be applied to all (sidelink) unicast/groupcast/broadcast operations.

In an embodiment of the present disclosure, "channel" may be applied by replacing "carrier" or "resource block set of a specific carrier" or "band".

In the present disclosure, multi-carrier may be interpreted as carrier aggregation (CA).

In the present disclosure, sidelink multi-carrier may be broadly interpreted as sidelink carrier aggregation (CA). In the present disclosure, sidelink carrier aggregation (CA) may be broadly interpreted as sidelink multi-carrier.

The (sidelink) resource pool (e.g., or (sidelink) HARQ entity) exemplified in the present disclosure may be interpreted as a sidelink resource pool (e.g., or a sidelink HARQ entity) for a specific sidelink carrier.

In (sidelink) multi-carrier operation, to guarantee HARQ-feedback-enabled MAC PDU transmission, the base station may be expected by the UE to configure PSFCH resources on at least one of exceptional pool(s) (e.g., or normal TX pool(s) or normal RX pool(s)) on at least one of the sidelink carrier/(SL) BWP/(SL) HARQ entities mapped to the same unicast service or the same source layer-2 ID and destination layer-2 ID pair (e.g., or the same groupcast/broadcast service or the same destination layer-2 ID) among multiple (sidelink) carriers/(SL) BWPs/(SL) HARQ entities. The present disclosure is not limited thereto.

When forming a unicast session or a groupcast or a broadcast session that performs HARQ-feedback-enabled MAC PDU transmission, the base station may restrict the UE to include at least one carrier that includes exceptional pool(s) (e.g., or normal TX pool(s) or normal RX pool(s)) for which PSFCH resources are configured. The present disclosure is not limited thereto.

When forming a unicast session or a groupcast or a broadcast session that performs HARQ-feedback-enabled MAC PDU transmission, the UE may be restricted to include at least one carrier that includes exceptional pool(s) (e.g., or normal TX pool(s) or normal RX pool(s)) for which PSFCH resources are configured. The present disclosure is not limited thereto.

In the present disclosure, a CBR threshold related to a (sidelink) carrier/(SL) BWP/(SL) HARQ entity may be configured per priority, per QoS profile (e.g., PDB, reliability), per SL radio bearer, or per logical channel.

In the present disclosure, a (sidelink) carrier may be interpreted as a (sidelink) BWP or a (sidelink) HARQ entity.

In an embodiment of the present disclosure, a unicast service may be alternatively interpreted as a Source Layer-2 ID and Destination Layer-2 ID pair.

In an embodiment of the present disclosure, a groupcast service may be alternatively interpreted as a Groupcast Destination Layer-2 ID.

In an embodiment of the present disclosure, a broadcast service may be alternatively interpreted as a Broadcast Destination Layer-2 ID.

In an embodiment of the present disclosure, "carrier" may be applied by replacing "band" or "resource block set of a specific carrier" or "resource pool set of a specific carrier" or "channel".

In an embodiment of the present disclosure, the beam management operation may be interpreted interchangeably as beam selection, spatial filter selection, beam pairing, spatial filter pairing, beam failure recovery (BFR), spatial filter recovery, beam sweeping, spatial filter sweeping, beam switching, spatial filter sweeping, reference signal (RS) resource measurement, RS resource measurement reporting, beam reporting, spatial filter reporting, and the like.

In an embodiment of the present disclosure, a beam may be alternatively interpreted as a transmit beam and/or a receive beam, and the like.

In an embodiment of the present disclosure, a beam may be interpreted interchangeably as an RS, an RS resource, or a spatial filter resource.

In an embodiment of the present disclosure, an RS may be interpreted interchangeably as an RS resource or a spatial filter resource.

In an embodiment of the present disclosure, a transmitting UE may be interpreted interchangeably as a UE transmitting a beam, a UE transmitting a beam RS, or a UE transmitting beam RS resources.

In an embodiment of the present disclosure, a receiving UE may be interpreted interchangeably as a UE receiving a beam, a UE receiving a beam RS, or a UE receiving beam RS resources.

In an embodiment of the present disclosure, information for a transmit or receive beam transmitted/received by the UE may be interpreted interchangeably as resource information of the reference signal (RS) related to the transmit beam and resource information of the RS related to the receive beam.

In an embodiment of the present disclosure, the direct communication request (DCR) message and/or the direct communication accept (DCA) message may be interpreted interchangeably as a PC5-S DCR message and/or a PC5-S DCA message.

In an embodiment of the present disclosure, although (SL) CSI-RS is exemplified as an RS for beam management, it is not limited thereto. The proposed operations in this disclosure may be equally extended and applied to cases using other reference signals (RS) (e.g., (sidelink) SSB) for beam management besides (SL) CSI-RS.

In an embodiment of the present disclosure, although RSRP is exemplified as RS measurement for beam management, it is not limited thereto. The proposed operations in this disclosure may be equally extended and applied to other measurement operations (e.g., received signal strength indicator (RSSI) measurement) for RS measurement for beam management.

In an embodiment of the present disclosure, spatial setting and/or transmission configuration indicator (TCI) information and/or quasi-colocation (QCL) information and/or beam may refer to each other and/or may be interpreted interchangeably as beam-related information, beam direction, spatial domain transmission filter, and/or spatial domain reception filter. For example, the spatial domain transmission filter may be a spatial domain TX filter. For example, the spatial domain reception filter may be a spatial domain RX filter.

In an embodiment of the present disclosure, a beam may be interpreted interchangeably as a spatial filter.

In an embodiment of the present disclosure, a transmit/transmission beam may be interpreted interchangeably as a spatial transmission (TX) filter or a spatial domain transmission (TX) filter.

In an embodiment of the present disclosure, a beam may be interpreted interchangeably as a transmit beam, receive beam, spatial filter, spatial transmission (TX) filter, spatial domain transmission (TX) filter, spatial reception (RX) filter, or spatial domain reception (RX) filter.

In an embodiment of the present disclosure, a receive beam may be interpreted interchangeably as a spatial reception (RX) filter or a spatial domain reception (RX) filter.

In an embodiment of the present disclosure, spatial setting information (or beam information) being the same for transmission may mean that the spatial domain TX filters of the UE are the same for two different transmission signals. In an embodiment of the present disclosure, spatial setting information (or beam information) being the same for reception may mean that two different reception signals are in a QCL 'Type D' relationship and/or use the same spatial RX parameters.

For example, whether or not (some of) the proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (Multi-Consecutive Slot Transmission) is applied, based on whether multi-PSFCH occasions are applied, based on resource order/location consist of MCSt, based on whether multiple starting points are configured within one slot, based on whether the 1st starting point (or 2nd starting point) is applied, etc.

Whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (multi-consecutive slot transmission) is applied, based on whether multi-PSFCH occasions are applied, based on resource order/location consist of MCSt, based on whether multiple starting points are configured within one slot, based on whether the 1st starting point (or 2nd starting point) is applied, etc.

For example, the present disclosure (whether or not (some of) the proposed method/rule of the present disclosure is applied and/or related parameter(s) (e.g., threshold value(s))) may be configured (differently or independently) for each resource pool. For example, the present disclosure (whether or not (some of) the proposed method/rule of the present disclosure is applied and/or related parameter(s) (e.g., threshold value(s))) may be configured (differently or independently) for each congestion level. For example, the present disclosure (whether or not (some of) the proposed method/rule of the present disclosure is applied and/or related parameter(s) (e.g., threshold value(s))) may be configured (differently or independently) for each service priority. For example, the present disclosure (whether or not (some of) the proposed method/rule of the present disclosure is applied and/or related parameter(s) (e.g., threshold value(s))) may be configured (differently or independently) for each service type. For example, the present disclosure (whether or not (some of) the proposed method/rule of the present disclosure is applied and/or related parameter(s) (e.g., threshold value(s))) may be configured (differently or independently) for each QoS requirement (e.g., latency, reliability). For example, the present disclosure (whether or not (some of) the proposed method/rule of the present disclosure is applied and/or related parameter(s) (e.g., threshold value(s))) may be configured (differently or independently) for each PQI (5G QoS identifier (5QI) for PC5). For example, the present disclosure (whether or not (some of) the proposed method/rule of the present disclosure is applied and/or related parameter(s) (e.g., threshold value(s))) may be configured (differently or independently) for each traffic type (e.g., periodic generation or aperiodic generation). For example, the present disclosure (whether or not (some of) the proposed method/rule of the present disclosure is applied and/or related parameter(s) (e.g., threshold value(s))) may be configured (differently or independently) for each SL transmission resource allocation mode (e.g., mode 1 or mode 2). For example, the present disclosure (whether or not (some of) the proposed method/rule of the present disclosure is applied and/or related parameter(s) (e.g., threshold value(s))) may be configured (differently or independently) for each Tx profile (e.g., a Tx profile indicating that a service supports sidelink DRX operation or a Tx profile indicating that a service does not need to support sidelink DRX operation).

For example, the present disclosure (e.g., whether or not the proposed rule is applied (and/or a related parameter configured value)) may be specifically (and/or independently and/or differently) configured for at least one of: whether to support PUCCH configuration (e.g., in a case where a PUCCH resource is configured or in a case where a PUCCH resource is not configured), a resource pool (e.g., a resource pool where a PSFCH is configured, or a resource pool where a PSFCH is not configured), service/packet type (and/or priority), a QoS profile or QoS requirement (e.g., URLLC/eMBB traffic, reliability, latency), PQI, PFI, cast type (e.g., unicast, groupcast, broadcast), a congestion level of a resource pool (e.g., CBR), SL HARQ feedback scheme (e.g., NACK-only feedback, ACK/NACK feedback), a case of transmitting a HARQ feedback enabled MAC PDU (and/or a HARQ feedback disabled MAC PDU), whether to configure a PUCCH-based SL HARQ feedback reporting operation, a case of (non-)performing pre-emption (and/or re-evaluation) (or resource reselection based thereon), (L2 or L1) identifiers (source and/or destination), (L2 or L1) identifiers of a combination of source layer ID and destination layer ID, identifiers of a combination of a pair of source layer ID and destination layer ID and a cast type, a direction of a pair of source layer ID and destination layer ID, PC5 RRC connection/link, a case of (non-)performing (or supporting) SL DRX, an SL mode type (resource allocation mode 1, resource allocation mode 2), (non-)performing periodic resource reservation, and a Tx profile (e.g., a Tx profile indicating that the service supports sidelink DRX operation, or a Tx profile indicating that the service does not need to support sidelink DRX operation).

The proposal and whether or not the proposal rule of the present disclosure is applied (and/or related parameter configuration value(s)) may also be applied to a mmWave SL operation.

FIG. 15 shows a method for a first device to perform wireless communication, based on an embodiment of the present disclosure. The embodiment of FIG. 15 may be combined with various embodiments of the present disclosure.

Referring to FIG. 15, in step S1510, the first device may obtain information related to multiple carriers. In step S1520, the first device may, based on a quality of service (QoS) flow, obtain a packet. In step S1530, the first device may, based on one or more carriers related to the QoS flow among the multiple carriers, perform a transmission. For example, information related to at least one carrier per QoS flow may be provided from a vehicle to everything (V2X) layer of the first device.

For example, the information related to at least one carrier per QoS flow may be provided from the V2X layer of the first device to an access stratum (AS) layer of the first device.

For example, based on at least one carrier related to the QoS flow among the multiple carriers, the transmission related to data may be performed.

For example, at least one carrier related to the QoS flow among the multiple carriers may be determined based on the information related to at least one carrier per QoS flow.

For example, based on the information related to at least one carrier per QoS flow, the at least one carrier related to the QoS flow among the multiple carriers may be determined by the AS layer of the first device.

For example, based on the information related to at least one carrier per QoS flow, whether to perform an operation for carrier aggregation (CA) in which two or more carriers among the multiple carriers are aggregated may be determined by the AS layer of the first device.

For example, information related to a transmission (TX) profile may be provided from the V2X layer of the first device. For example, based on the information related to the TX profile, whether to perform an operation for CA in which two or more carriers among the multiple carriers are aggregated may be determined by the AS layer of the first device.

For example, the information related to at least one carrier per QoS flow may be information related to at least one carrier per PC5 QoS flow.

For example, the transmission may be a sidelink transmission.

For example, the information related to the multiple carriers may be information related to CA in which two or more carriers are aggregated.

For example, the CA may be CA related to mode 2 resource allocation.

For example, the transmission may be performed based on unicast mode communication.

For example, the information related to the TX profile may be information related to CA in which two or more carriers are aggregated.

The proposed method can be applied to the device, based on various embodiments of the present disclosure. First, the processor 102 of the first device 100 may obtain information related to multiple carriers. In addition, the processor 102 of the first device 100 may, based on a quality of service (QoS) flow, obtain a packet. In addition, the processor 102 of the first device 100 may control the transceiver 106 to, based on one or more carriers related to the QoS flow among the multiple carriers, perform a transmission. For example, information related to at least one carrier per QoS flow may be provided from a vehicle to everything (V2X) layer of the first device.

Based on an embodiment of the present disclosure, a first device adapted to perform wireless communication may be provided. For example, the first device may include: at least one transceiver; at least one processor; and at least one memory connected to the at least one processor and storing instructions. For example, the instructions, based on being executed by the at least one processor, may cause the first device to perform operations comprising: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

Based on an embodiment of the present disclosure, a processing device adapted to control a first device may be provided. The processing device may include: at least one processor; and at least one memory connected to the at least one processor and storing instructions. For example, the instructions, based on being executed by the at least one processor, may cause the first device to perform operations comprising: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

Based on an embodiment of the present disclosure, a non-transitory computer-readable storage medium storing instructions may be provided. For example, the instructions, based on being executed, may cause a first device to perform operations comprising: obtaining information related to multiple carriers; based on a quality of service (QoS) flow, obtaining a packet; and based on one or more carriers related to the QoS flow among the multiple carriers, performing a transmission. For example, information related to at least one carrier per QoS flow may be provided from a vehicle to everything (V2X) layer of the first device.

FIG. 16 shows a method for a second device to perform wireless communication, based on an embodiment of the present disclosure. The embodiment of FIG. 16 may be combined with various embodiments of the present disclosure.

Referring to FIG. 16, in step S1610, the second device may, based on one or more carriers related to a quality of service (QoS) flow among multiple carriers, perform a transmission. For example, information related to the multiple carriers may be obtained. For example, based on the QoS flow, a packet may be obtained. For example, information related to at least one carrier per QoS flow may be provided from a vehicle to everything (V2X) layer.

For example, the information related to at least one carrier per QoS flow may be provided from the V2X layer to an access stratum (AS) layer.

For example, based on at least one carrier related to the QoS flow among the multiple carriers, the transmission related to data may be performed.

For example, at least one carrier related to the QoS flow among the multiple carriers may be determined based on the information related to at least one carrier per QoS flow.

For example, based on the information related to at least one carrier per QoS flow, the at least one carrier related to the QoS flow among the multiple carriers may be determined by the AS layer.

For example, based on the information related to at least one carrier per QoS flow, whether to perform an operation for carrier aggregation (CA) in which two or more carriers among the multiple carriers are aggregated may be determined by the AS layer.

For example, information related to a transmission (TX) profile may be provided from the V2X layer. For example, based on the information related to the TX profile, whether to perform an operation for CA in which two or more carriers among the multiple carriers are aggregated may be determined by the AS layer.

For example, the information related to at least one carrier per QoS flow may be information related to at least one carrier per PC5 QoS flow.

For example, the transmission may be a sidelink transmission.

For example, the information related to the multiple carriers may be information related to CA in which two or more carriers are aggregated.

For example, the CA may be CA related to mode 2 resource allocation.

For example, the transmission may be performed based on unicast mode communication.

For example, the information related to the TX profile may be information related to CA in which two or more carriers are aggregated.

The proposed method can be applied to the device, based on various embodiments of the present disclosure. First, the processor 202 of the second device 200 may control the transceiver 206 to, based on one or more carriers related to a quality of service (QoS) flow among multiple carriers, perform a transmission. For example, information related to the multiple carriers may be obtained. For example, based on the QoS flow, a packet may be obtained. For example, information related to at least one carrier per QoS flow may be provided from a vehicle to everything (V2X) layer.

Based on an embodiment of the present disclosure, a second device adapted to perform wireless communication may be provided. For example, the second device may include: at least one transceiver; at least one processor; and at least one memory connected to the at least one processor and storing instructions. For example, the instructions, based on being executed by the at least one processor, may cause the second device to perform operations comprising: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

Based on an embodiment of the present disclosure, a processing device adapted to control a second device may be provided. The processing device may include: at least one processor; and at least one memory connected to the at least one processor and storing instructions. For example, the instructions, based on being executed by the at least one processor, may cause the second device to perform operations comprising: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

Based on an embodiment of the present disclosure, a non-transitory computer-readable storage medium storing instructions may be provided. For example, the instructions, based on being executed, may cause a second device to perform operations comprising: based on one or more carriers related to a quality of service (QoS) flow among multiple carriers, performing a transmission. For example, information related to the multiple carriers may be obtained. For example, based on the QoS flow, a packet may be obtained. For example, information related to at least one carrier per QoS flow may be provided from a vehicle to everything (V2X) layer.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

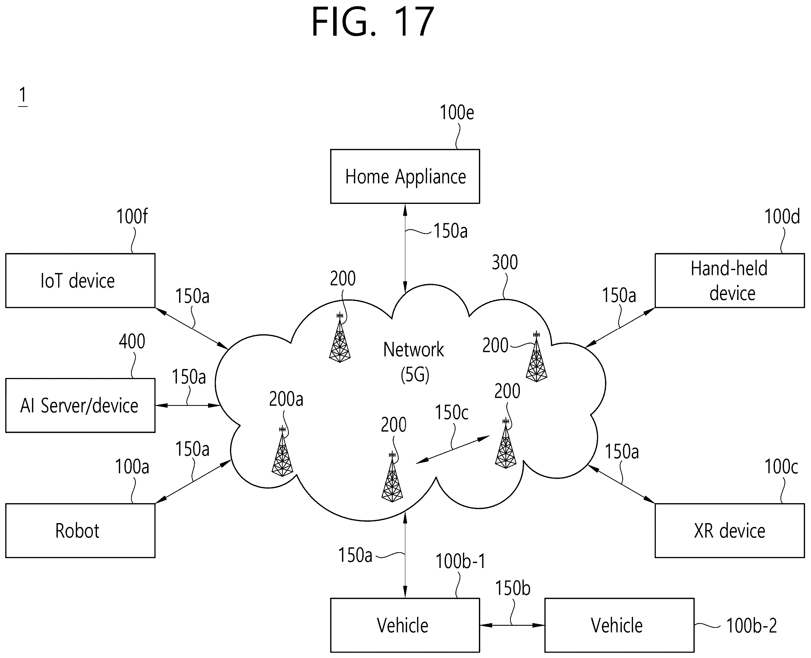

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

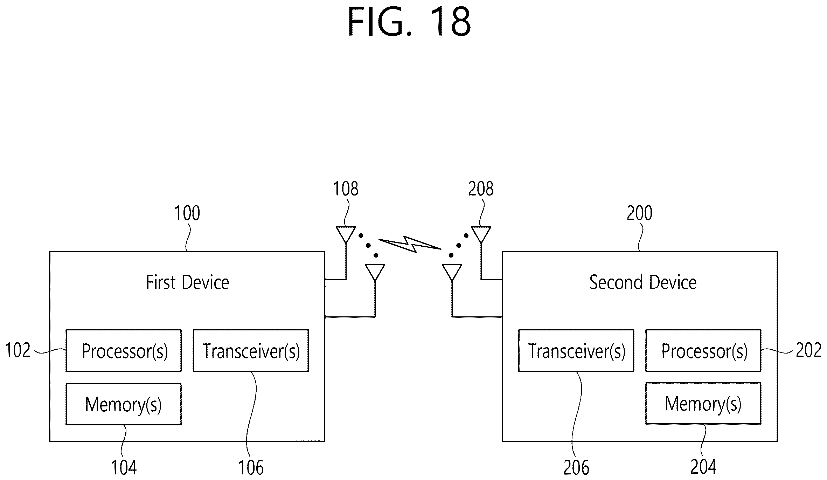

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

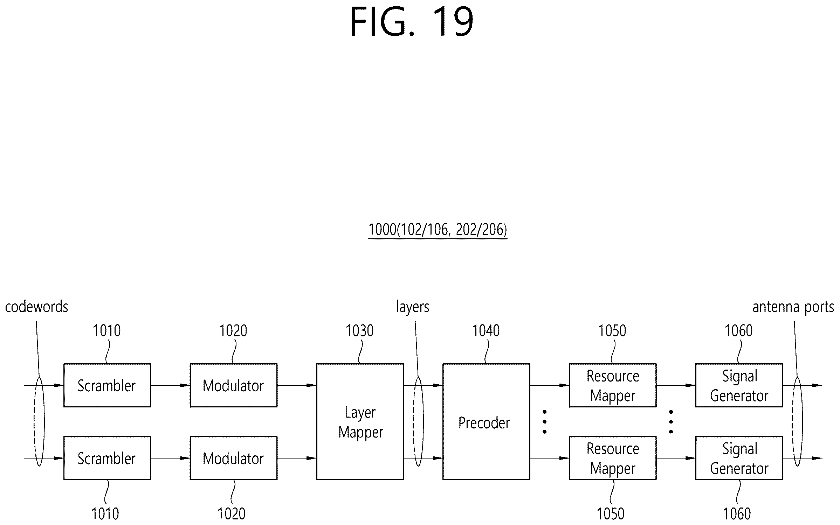

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

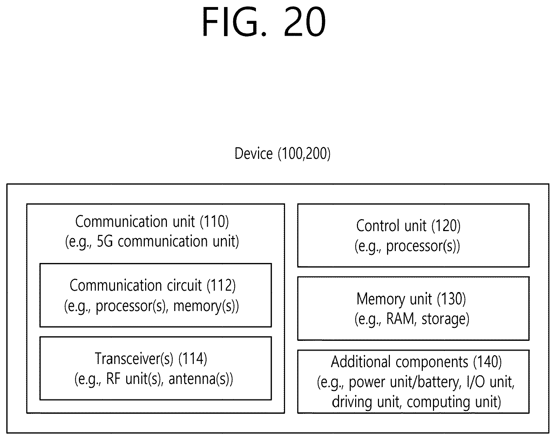

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

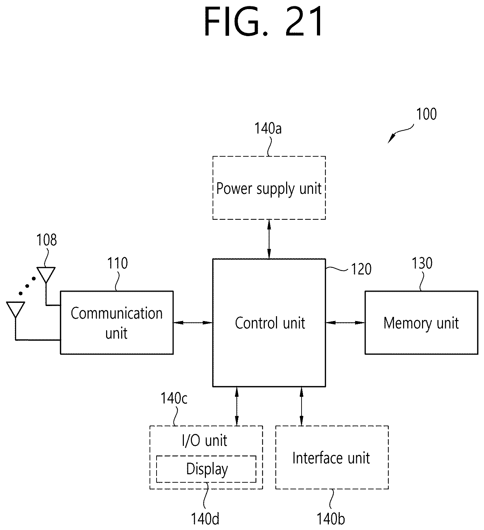

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

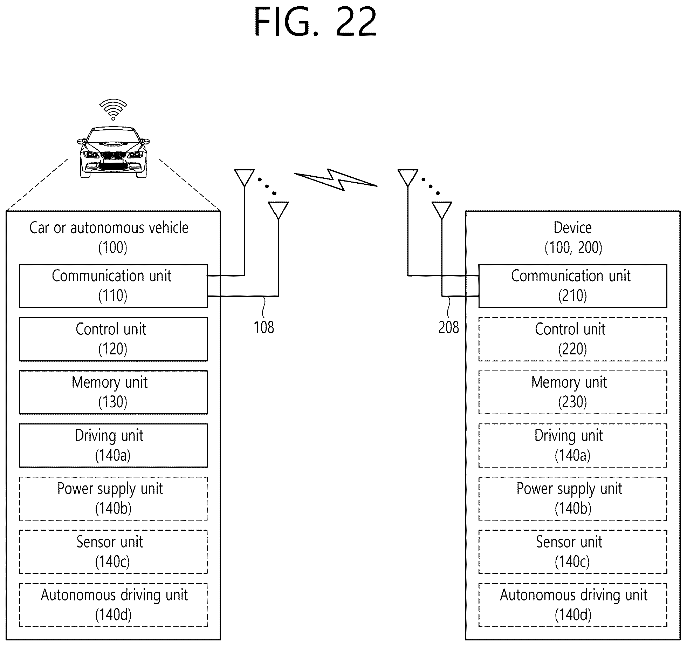

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device in a wireless communication system, comprising:
obtaining information related to multiple carriers;
based on a quality of service (QoS) flow, obtaining a packet; and
based on one or more carriers related to the QoS flow among the multiple carriers, performing a transmission,
wherein information related to at least one carrier per QoS flow is provided from a vehicle to everything (V2X) layer of the first device.

2. The method of claim 1,
wherein the information related to at least one carrier per QoS flow is provided from the V2X layer of the first device to an access stratum (AS) layer of the first device.

3. The method of claim 1,
wherein, based on at least one carrier related to the QoS flow among the multiple carriers, the transmission related to data is performed.

4. The method of claim 1,
wherein at least one carrier related to the QoS flow among the multiple carriers is determined based on the information related to at least one carrier per QoS flow.

5. The method of claim 4,
wherein, based on the information related to at least one carrier per QoS flow, the at least one carrier related to the QoS flow among the multiple carriers is determined by the AS layer of the first device.

6. The method of claim 1,
wherein, based on the information related to at least one carrier per QoS flow, whether to perform an operation for carrier aggregation (CA) in which two or more carriers among the multiple carriers are aggregated is determined by the AS layer of the first device.

7. The method of claim 1,
wherein information related to a transmission (TX) profile is provided from the V2X layer of the first device, and
wherein, based on the information related to the TX profile, whether to perform an operation for CA in which two or more carriers among the multiple carriers are aggregated is determined by the AS layer of the first device.

8. The method of claim 1,
wherein the information related to at least one carrier per QoS flow is information related to at least one carrier per PC5 QoS flow.

9. The method of claim 1,
wherein the transmission is a sidelink transmission.

10. The method of claim 1,
wherein the information related to the multiple carriers is information related to CA in which two or more carriers are aggregated.

11. The method of claim 10,
wherein the CA is CA related to mode 2 resource allocation.

12. The method of claim 1,
wherein the transmission is performed based on unicast mode communication.

13. The method of claim 7,
wherein the information related to the TX profile is information related to CA in which two or more carriers are aggregated.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
obtaining information related to multiple carriers;
based on a quality of service (QoS) flow, obtaining a packet; and
based on one or more carriers related to the QoS flow among the multiple carriers, performing a transmission,
wherein information related to at least one carrier per QoS flow is provided from a vehicle to everything (V2X) layer of the first device.

15. A processing device adapted to control a first device, the processing device comprising:
at least one processor; and
at least one memory connected to the at least one processor and storing instructions that, based on being executed by the at least one processor, cause the first device to perform operations comprising:
obtaining information related to multiple carriers;
based on a quality of service (QoS) flow, obtaining a packet; and
based on one or more carriers related to the QoS flow among the multiple carriers, performing a transmission,
wherein information related to at least one carrier per QoS flow is provided from a vehicle to everything (V2X) layer of the first device.

16. A non-transitory computer-readable storage medium storing instructions that, based on being executed, cause a first device to perform operations comprising:
obtaining information related to multiple carriers;
based on a quality of service (QoS) flow, obtaining a packet; and
based on one or more carriers related to the QoS flow among the multiple carriers, performing a transmission,
wherein information related to at least one carrier per QoS flow is provided from a vehicle to everything (V2X) layer of the first device.

17. A method performed by a second device in a wireless communication system, the method comprising:
based on one or more carriers related to a quality of service (QoS) flow among multiple carriers, performing a transmission,
wherein information related to the multiple carriers is obtained,
wherein, based on the QoS flow, a packet is obtained, and
wherein information related to at least one carrier per QoS flow is provided from a vehicle to everything (V2X) layer.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
based on one or more carriers related to a quality of service (QoS) flow among multiple carriers, performing a transmission,
wherein information related to the multiple carriers is obtained,
wherein, based on the QoS flow, a packet is obtained, and
wherein information related to at least one carrier per QoS flow is provided from a vehicle to everything (V2X) layer.

19. A processing device adapted to control a second device, the processing device comprising:
at least one processor; and
at least one memory connected to the at least one processor and storing instructions that, based on being executed by the at least one processor, cause the second device to perform operations comprising:
based on one or more carriers related to a quality of service (QoS) flow among multiple carriers, performing a transmission,
wherein information related to the multiple carriers is obtained,
wherein, based on the QoS flow, a packet is obtained, and
wherein information related to at least one carrier per QoS flow is provided from a vehicle to everything (V2X) layer.

20. A non-transitory computer-readable storage medium storing instructions that, based on being executed, cause a second device to perform operations comprising:
based on one or more carriers related to a quality of service (QoS) flow among multiple carriers, performing a transmission,
wherein information related to the multiple carriers is obtained,
wherein, based on the QoS flow, a packet is obtained, and
wherein information related to at least one carrier per QoS flow is provided from a vehicle to everything (V2X) layer.
